# EUROPEAN PATENT APPLICATION

(11) **EP 4 429 401 A1**
(43) Date of publication of application: **11.09.2024**
(21) Application number: 22909665.6
(22) Date of filing: 28.11.2022
(51) Int. Cl.: H04W 88/18, H04W 28/02, H04W 28/08

(54) **COMMUNICATION METHOD AND COMMUNICATION APPARATUS**

(30) Priority: 24.12.2021 CN 202111603020
(71) Applicant: Huawei Technologies Co., Ltd., Shenzhen, Guangdong 518129 (CN)
(72) Inventor: LIU, Zhe, Shenzhen, Guangdong 518129 (CN); PENG, Chenghui, Shenzhen, Guangdong 518129 (CN); WANG, Jun, Shenzhen, Guangdong 518129 (CN); WANG, Enbo, Shenzhen, Guangdong 518129 (CN); WU, Jianjun, Shenzhen, Guangdong 518129 (CN)
(74) Representative: Pfenning, Meinig & Partner mbB
(86) International application number: PCT/CN2022/134683
(87) International publication number: WO 2023/116350

(57) **Abstract**

Provided are a communication method and a communication apparatus. In a manner in which a network device configures computing power of a terminal device based on first configuration information, the terminal device serves as a computing node to participate in a computing process corresponding to a computing power instance. This can effectively improve a computing resource reuse degree, to increase network revenue. In the method, the terminal device receives a first message from the network device, where the first message includes first configuration information, and the first configuration information includes configuration information of at least one computing power instance; the terminal device obtains first information, where the first information indicates a first computing power instance, and the first computing power instance is a computing power instance in the at least one computing power instance; and the terminal device executes the first computing power instance based on the first information.

## Description

This application claims priority to Chinese Patent Application No. 202111603020.4, filed with the China National Intellectual Property Administration on December 24, 2021, and entitled "COMMUNICATION METHOD AND COMMUNICATION APPARATUS", which is incorporated herein by reference in its entirety.

### TECHNICAL FIELD

This application relates to the field of wireless technologies, and in particular, to a communication method and a communication apparatus.

### BACKGROUND

Wireless communication means transmission communication between two or more communication nodes without using a conductor or a cable. The communication nodes generally include a network device and a terminal device.

Currently, in a wireless communication system, a communication node generally has a signal sending and receiving capability and a computing capability. For example, the communication node is a terminal device having a computing capability. The computing capability of the terminal device needs to provide computing power support for the signal sending and receiving capability (for example, calculation of a time domain resource and a frequency domain resource that carry a signal), to implement communication between the terminal device and another communication node. In addition, the computing capability of the terminal device needs to provide computing power support for computing of a local application (for example, calculation of the generation and display of data such as language, text, or images), to implement presentation of the local application on the terminal device. In other words, a computing capability of a current communication node is to support communication between different communication nodes and support presentation of a local application on the communication node.

However, in a future communication network, different communication nodes need to communicate, and may also need to consider a computing capability, to implement network endogenous computing power in a communication system.

Therefore, in a communication network, how to implement configuration and execution of computing power is a technical problem to be urgently resolved.

### SUMMARY

Embodiments of this application provide a communication method and a communication apparatus. In a manner in which a network device configures computing power of a terminal device based on first configuration information, the terminal device serves as a computing node to participate in a computing process corresponding to a computing power instance. This can effectively improve a computing resource reuse degree, to increase network revenue.

A first aspect of this application provides a communication method. The method is performed by a terminal device, the method is performed by some components (such as a processor, a chip, or a chip system) in a terminal device, or the method may be implemented by a logical module or software that can implement all or some functions of a terminal device. In the first aspect and the possible implementations of the first aspect, an example in which the communication method is performed by a terminal device is used for description. In the method, the terminal device receives a first message from the network device, where the first message includes first configuration information, and the first configuration information includes configuration information of at least one computing power instance; the terminal device obtains first information, where the first information indicates a first computing power instance, and the first computing power instance is a computing power instance in the at least one computing power instance; and the terminal device executes the first computing power instance based on the first information.

Based on the foregoing technical solution, the terminal device receives, from the network device, the first message including the first configuration information, where the first configuration information includes the configuration information of the at least one computing power instance. After the terminal device obtains the first information for indicating the first computing power instance in the at least one computing power instance, the terminal device executes the first computing power instance based on the first information. In other words, after the terminal device configures the computing power instance based on the indication of the network device, the terminal device executes the corresponding computing power instance based on the first information. Therefore, a wireless network system in which the terminal device and the network device are located may become dual infrastructure for communication, connection, and computing. In a manner in which the network device configures computing power of the terminal device based on the first configuration information, the terminal device serves as a computing node to participate in a computing process corresponding to a computing power instance. This can effectively improve a computing resource reuse degree, to increase network revenue.

In some implementations, the first computing power instance may be a computing power instance on which the network device and one or more terminal devices perform collaborative computing, so that the terminal device can share a computing resource on the network device side when executing the computing power instance based on the first configuration information, to resolve a problem of insufficient computing resources of the terminal device.

In some implementations, the first computing power instance may be a computing power instance on which the terminal device and another computing node perform collaborative computing, so that the terminal device can share a computing resource on the terminal device side when executing the computing power instance based on the first configuration information. In this way, the computing resource of the terminal device is shared, and a computing resource reuse degree is improved.

Optionally, the another computing node may include another terminal device and/or another network device.

In a possible implementation of the first aspect, the first message further includes second configuration information, the second configuration information includes configuration information of at least one computing power resource, and the at least one computing power resource is associated with the at least one computing power instance.

Optionally, the second configuration information is included in another message.

It should be understood that a computing power resource (or referred to as an execution entity) in this application may indicate a running environment of a computing power instance, for example, storage, power, memory, computing power, or the like that is required when the computing power instance runs.

It should be understood that the computing power instance in this application may indicate a computing resource usage mode or method related to a computing amount, for example, computing power, a model, a split learning location, an inference segmentation point location, local epochs of federated learning, and the like.

Based on the foregoing technical solution, the terminal device further receives the second configuration information including the configuration information of the at least one computing power resource, where the at least one computing power resource is associated with the at least one computing power instance. Therefore, when the computing power of the terminal device is configured, the terminal device serves as the computing node to participate in the computing process corresponding to the computing power instance, the terminal device determines, based on the second configuration information, a computing power resource used in the process of executing the computing power instance in the at least one computing power instance.

In a possible implementation of the first aspect, the first information includes an identifier of the first computing power instance and/or an identifier of computing power resource information corresponding to the first computing power instance. That the terminal device obtains first information includes: The terminal device receives the first information, where the first information is carried in layer 1 (layer 1, L1) control information, layer 2 (layer 2, L2) control information, or a layer 3 (layer 3, L3) message.

Based on the foregoing technical solution, the terminal device may receive, from the network device, the first information for indicating the first computing power instance, so that the terminal device executes the first computing power instance based on the indication of the network device. Therefore, when the computing power of the terminal device is configured, the terminal device serves as the computing node to participate in the computing process corresponding to the computing power instance, and the network device may further perform, based on the first message, dynamic adjustment on the computing power instance executed by the terminal device.

In a possible implementation of the first aspect, before the terminal device receives the first information, the method further includes: The terminal device receives a reference signal (reference signal, RS); and the terminal device sends a measurement result corresponding to the RS.

Based on the foregoing technical solution, before receiving the first information, the terminal device may receive the RS and send the measurement result corresponding to the RS, so that the network device may use the measurement result of the RS as a basis for the network device to send the first information. The measurement result of the RS may reflect information about a channel between the terminal device and the network device. Therefore, the network device may perform, based on the measurement result of the RS, dynamic adjustment on the computing power instance executed by the terminal device (and/or the computing power resource corresponding to the computing power instance executed by the terminal device).

In a possible implementation of the first aspect, the first computing power instance is a default computing power instance; and/or the computing power resource information corresponding to the first computing power instance is default computing power resource information.

Optionally, the default computing power instance may also be referred to as a basic computing power instance, a preconfigured computing power instance, or the like. Correspondingly, the default computing power resource information may also be referred to as basic computing power resource information, preconfigured basic computing power resource information, or the like.

Optionally, both the network device and the terminal device have (or prestore) the default computing power instance.

Optionally, the default computing power instance may be a computing power instance with low power consumption/low overhead/low computing capability requirement.

Based on the foregoing technical solution, the first computing power instance indicated by the first information may be the default computing power instance, and/or the computing power resource information corresponding to the first computing power instance indicated by the first information is the default computing power resource information. Therefore, based on implementation of the default computing power instance, it can be ensured that if signaling (such as reconfiguration signaling and scheduling signaling) transmitted between the network device and the terminal device fails to be transmitted, the terminal device can also execute the default computing power instance. In this way, the terminal device can still serve as the computing node to participate in the computing process corresponding to the computing power instance, to improve a computing resource reuse degree.

In a possible implementation of the first aspect, that the terminal device obtains first information includes: The terminal device generates the first information when at least one of the following is met:
a first timer expires, where configuration information of the first timer is included in the first message;
a battery level of the terminal device is less than a first threshold;
the terminal device enters a radio resource control idle RRC idle state;
signal quality that is of the RS and that is obtained by the terminal device through measurement is less than a threshold;
the terminal device performs cell handover;
the terminal device performs RRM measurement;
an executed computing amount corresponding to a computing power instance currently executed by the terminal device is greater than a threshold; or
the terminal device determines that a quality of service (quality of service, QoS) requirement is less than a threshold.

Optionally, the signal quality may include at least one of the following: reference signal received power (reference signal received power, RSRP), reference signal received quality (reference signal received quality, RSRQ), or a signal to interference plus noise ratio (signal to interference plus noise ratio, SINR).

Based on the foregoing technical solution, the terminal device may trigger generation of the first information based on occurrence of the at least one event. In other words, without the indication of the network device, the terminal device may perform, based on the at least one event, dynamic switching of the computing power instance executed by the terminal device. Therefore, if signaling (such as reconfiguration signaling and scheduling signaling) transmitted between the network device and the terminal device fails to be transmitted, it is ensured that the terminal device can also execute the default computing power instance. In this way, the terminal device can still serve as the computing node to participate in the computing process corresponding to the computing power instance, to improve a computing resource reuse degree.

In a possible implementation of the first aspect, before the terminal device receives the first message from the network device, the method further includes: The terminal device sends first indication information to the network device, where the first indication information indicates a computing power status of the terminal device.

Based on the foregoing technical solution, before the terminal device receives the first message, the terminal device may send, to the network device, the first indication information for indicating the computing power status of the terminal device, so that the network device may use the computing power status of the terminal device as a basis for the network device to send the first message. Therefore, the network device may perform, based on the computing power status of the terminal device, dynamic adjustment on the computing power instance executed by the terminal device (and/or the computing power resource corresponding to the computing power instance executed by the terminal device).

In a possible implementation of the first aspect, before the terminal device receives the first message from the network device, the method further includes: The terminal device sends second indication information to the network device, where the second indication information indicates computing power resource information and/or a computing power instance expected by the terminal device.

Based on the foregoing technical solution, before the terminal device receives the first message, the terminal device may send, to the network device, the second indication information for indicating the computing power resource information and/or the computing power instance expected by the terminal device, so that the network device may use the computing power resource information and/or the computing power instance expected by the terminal device as a basis for the network device to send the first message. Therefore, the network device may perform, based on the computing power resource information and/or the computing power instance expected by the terminal device, dynamic adjustment on the computing power instance executed by the terminal device (and/or the computing power resource corresponding to the computing power instance executed by the terminal device), so that the provided configuration information can meet a requirement of the terminal device.

In a possible implementation of the first aspect, the method further includes: When the terminal device executes the first computing power instance based on the first information, the terminal device sends third indication information, where the third indication information indicates computing power adjustment information of the terminal device; and the terminal device receives third configuration information from the network device, where the third configuration information is used to update the first configuration information, and/or the third configuration information is used to update the second configuration information.

Based on the foregoing technical solution, in the process in which the terminal device executes the first computing power instance based on the first information, the terminal device may send, to the network device, the third indication information for indicating the computing power adjustment information of the terminal device, so that the network device may use the computing power adjustment information of the terminal device as a basis for the network device to send the updated configuration (namely, the third configuration information for updating the first configuration information, and/or the second configuration information). Therefore, the network device may perform, based on the computing power adjustment information of the terminal device, dynamic adjustment on the computing power instance executed by the terminal device (and/or the computing power resource corresponding to the computing power instance executed by the terminal device), so that the provided configuration information can meet a computing power adjustment requirement of the terminal device.

A second aspect of this application provides a communication method. The method is performed by a network device, the method is performed by some components (such as a processor, a chip, or a chip system) in a network device, or the method may be implemented by a logical module or software that can implement all or some functions of a network device. In the second aspect and the possible implementations of the second aspect, an example in which the communication method is performed by a network device is used for description. In the method, the network device generates a first message, where the first message includes first configuration information, and the first configuration information includes configuration information of at least one computing power instance; and the network device sends the first message.

Based on the foregoing technical solution, the first message sent by the network device includes the first configuration information, and the first configuration information includes the configuration information of the at least one computing power instance. After a terminal device obtains first information for indicating a first computing power instance in the at least one computing power instance, the terminal device executes the first computing power instance based on the first information. In other words, after the terminal device configures the computing power instance based on the indication of the network device, the terminal device executes the corresponding computing power instance based on the first information. Therefore, a wireless network system in which the terminal device and the network device are located may become dual infrastructure for communication, connection, and computing. In a manner in which the network device configures computing power of the terminal device based on the first configuration information, the terminal device serves as a computing node to participate in a computing process corresponding to a computing power instance. This can effectively improve a computing resource reuse degree, to increase network revenue.

In a possible implementation of the second aspect, the first message further includes second configuration information, the second configuration information includes configuration information of at least one computing power resource, and the at least one computing power resource is associated with the at least one computing power instance.

Optionally, the second configuration information is included in another message.

Based on the foregoing technical solution, the network device further sends the second configuration information including the configuration information of the at least one computing power resource, where the at least one computing power resource is associated with the at least one computing power instance. Therefore, when the computing power of the terminal device is configured, the terminal device serves as the computing node to participate in the computing process corresponding to the computing power instance, the terminal device determines, based on the second configuration information, a computing power resource used in the process of executing the computing power instance in the at least one computing power instance.

In a possible implementation of the second aspect, the method further includes: The network device sends the first information, where the first information indicates the first computing power instance, the first computing power instance is a computing power instance in the at least one computing power instance, the first information includes an identifier of the first computing power instance and/or an identifier of computing power resource information corresponding to the first computing power instance, and the first information is carried in L1 control information, L2 control information, or an L3 message.

Based on the foregoing technical solution, the network device may send the first information for indicating the first computing power instance, so that the terminal device executes the first computing power instance based on the indication of the network device. Therefore, when the computing power of the terminal device is configured, the terminal device serves as the computing node to participate in the computing process corresponding to the computing power instance, and the network device may further perform, based on the first message, dynamic adjustment on the computing power instance executed by the terminal device.

In some implementations, the first computing power instance may be a computing power instance on which the network device and one or more terminal devices perform collaborative computing, so that the terminal device can share a computing resource on the network device side when executing the first computing power instance based on the first information as the indication of the network device, to resolve a problem of insufficient computing resources of the terminal device. Correspondingly, the network device also needs to perform a partial computing process of the first computing power instance based on the first information. In other words, the network device also needs to locally adjust the first computing power instance corresponding to the first information, so that the network device and the terminal device can implement dynamic synchronous adjustment in the collaborative computing process.

In some implementations, the first computing power instance may be a computing power instance on which the terminal device and another computing node perform collaborative computing, so that the terminal device can share a computing resource on the terminal device side when executing the first computing power instance based on the first information. In this way, the computing resource of the terminal device is shared, and a computing resource reuse degree is improved. Correspondingly, the network device may not participate in execution of the first computing power instance. Therefore, the network device may not perform a partial computing process of the first computing power instance based on the first information. In other words, the network device does not need to locally adjust the first computing power instance corresponding to the first information.

Optionally, the another computing node may include another terminal device and/or another network device.

In a possible implementation of the second aspect, before the network device sends the first information, the method further includes: The network device sends a reference signal RS; the network device receives a measurement result corresponding to the RS; and the network device generates the first information based on the measurement result corresponding to the RS.

Based on the foregoing technical solution, before sending the first information, the network device may send the RS and receive the measurement result corresponding to the RS, so that the network device may use the measurement result of the RS as a basis for the network device to send the first information. The measurement result of the RS may reflect information about a channel between the terminal device and the network device. Therefore, the network device may perform, based on the measurement result of the RS, dynamic adjustment on the computing power instance executed by the terminal device (and/or the computing power resource corresponding to the computing power instance executed by the terminal device).

In a possible implementation of the second aspect, before the network device sends the first information, the method further includes: The network device receives first indication information from the terminal device, where the first indication information indicates a computing power status of the terminal device; and the network device determines the first information based on the first indication information.

Based on the foregoing technical solution, before the network device sends the first message, the network device receives the first indication information for indicating the computing power status of the terminal device, so that the network device may use the computing power status of the terminal device as a basis for the network device to send the first message. Therefore, the network device may perform, based on the computing power status of the terminal device, dynamic adjustment on the computing power instance executed by the terminal device (and/or the computing power resource corresponding to the computing power instance executed by the terminal device).

In a possible implementation of the second aspect, before the network device sends the first information, the method further includes: The network device receives second indication information from the terminal device, where the second indication information indicates computing power resource information and/or a computing power instance expected by the terminal device; and the network device determines the first information based on the second indication information.

Based on the foregoing technical solution, before the network device sends the first message, the network device receives the second indication information for indicating the computing power resource information and/or the computing power instance expected by the terminal device, so that the network device may use the computing power resource information and/or the computing power instance expected by the terminal device as a basis for the network device to send the first message. Therefore, the network device may perform, based on the computing power resource information and/or the computing power instance expected by the terminal device, dynamic adjustment on the computing power instance executed by the terminal device (and/or the computing power resource corresponding to the computing power instance executed by the terminal device), so that the provided configuration information can meet a requirement of the terminal device.

In a possible implementation of the second aspect, after the network device sends the first information, the method further includes: The network device receives third indication information from the terminal device, where the third indication information indicates computing power adjustment information of the terminal device; and the network device sends third configuration information based on the third indication information, where the third configuration information is used to update the first configuration information, and/or the third configuration information is used to update the second configuration information.

Based on the foregoing technical solution, the network device may further receive the third indication information for indicating the computing power adjustment information of the terminal device, so that the network device may use the computing power adjustment information of the terminal device as a basis for the network device to send the updated configuration (namely, the third configuration information for updating the first configuration information and/or the second configuration information). Therefore, the network device may perform, based on the computing power adjustment information of the terminal device, dynamic adjustment on the computing power instance executed by the terminal device (and/or the computing power resource corresponding to the computing power instance executed by the terminal device), so that the provided configuration information can meet a computing power adjustment requirement of the terminal device.

In a possible implementation of the first aspect or the second aspect, the computing power instance in the at least one computing power instance includes at least one of the following: execution duration information, computing power information, model information, a split learning location, an inference segmentation point location, or local epochs of federated learning.

In a possible implementation of the first aspect or the second aspect, the information of the at least one computing power resource includes at least one of the following:
central processing unit (central processor unit, CPU) type information, storage information, execution duration information, memory information, or battery level information.

In a possible implementation of the first aspect or the second aspect, that the at least one computing power resource is associated with the at least one computing power instance includes:
each of the at least one computing power resource is in a one-to-one correspondence with each of the at least one computing power instance; or
one of the at least one computing power resource corresponds to one or more computing power instances in the at least one computing power instance.

Optionally, a computing power resource corresponding to the at least one computing power resource is greater than or equal to a maximum quantity of computing power resources required by the at least one computing power instance.

Based on the foregoing technical solution, the at least one computing power resource configured by using the second configuration information is associated with the at least one computing power instance configured by using the first configuration information. A computing power resource in the at least one computing power resource may be in a one-to-one correspondence or may be in a one-to-one or one-to-many correspondence with a computing power instance in the at least one computing power instance, to improve flexibility of a process in which the network device configures a computing power instance and a computing power resource.

In addition, if one computing power resource in the at least one computing power resource corresponds to a plurality of computing power instances in the at least one computing power instance, that is, if the computing power resource in the at least one computing power resource is in the one-to-many correspondence with the computing power instance in the at least one computing power instance, because the terminal device may execute a plurality of different computing power instances on the computing power resource, the terminal device does not need to determine (or reconfigure, prepare, activate, or the like) a new computing power resource when performing a switching process of the computing power instance, so that the terminal device can quickly switch between a plurality of different computing power instances corresponding to the computing power resource.

In a possible implementation of the first aspect or the second aspect, the first indication information includes at least one of the following:
CPU type information, storage information, memory information, battery level information, and computing power utilization information.

In a possible implementation of the first aspect or the second aspect, the third indication information includes:
memory information, battery level information, and computing power utilization information.

A third aspect of this application provides a communication method. The method is performed by a terminal device, the method is performed by some components (such as a processor, a chip, or a chip system) in a terminal device, or the method may be implemented by a logical module or software that can implement all or some functions of a terminal device. In the third aspect and the possible implementations of the third aspect, an example in which the communication method is performed by a terminal device is used for description. In the method, the terminal device sends computing power indication information to a network device; and the terminal device receives a first message from the network device, where the first message includes first configuration information, and the first configuration information is used to configure at least one computing power instance.

Based on the foregoing technical solution, after the terminal device sends the computing power indication information, the network device generates, based on the computing power indication information, and sends the first message including the first configuration information, where the first configuration information is used to configure the at least one computing power instance, so that the terminal device receives the first configuration information. In other words, after the terminal device sends related information for indicating computing power of the terminal device, the network device configures, based on the information, the computing power instance executed by the terminal device. Therefore, a wireless network system in which the terminal device and the network device are located may become dual infrastructure for communication, connection, and computing. In a manner in which the network device configures the computing power of the terminal device based on the first configuration information, the terminal device serves as a computing node to participate in a computing process corresponding to a computing power instance. This can effectively improve a computing resource reuse degree, to increase network revenue.

In some implementations, a first computing power instance may be a computing power instance on which the network device and one or more terminal devices perform collaborative computing, so that the terminal device can share a computing resource on the network device side when executing the computing power instance based on the first configuration information, to resolve a problem of insufficient computing resources of the terminal device.

In some implementations, the first computing power instance may be a computing power instance on which the terminal device and another computing node perform collaborative computing, so that the terminal device can share a computing resource on the terminal device side when executing the computing power instance based on the first configuration information. In this way, the computing resource of the terminal device is shared, and a computing resource reuse degree is improved.

Optionally, the another computing node may include another terminal device and/or another network device.

In a possible implementation of the third aspect, before the terminal device sends the computing power indication information to the network device, the method further includes: The terminal device receives a second message from the network device, where the second message includes initial configuration information, and the initial configuration information is used to configure at least one computing power instance.

Based on the foregoing technical solution, before the terminal device sends the computing power indication information to the network device, the terminal device may further receive the second message including the initial configuration information, where the initial configuration information is used to configure the at least one computing power instance. Then, when the terminal device determines that the initial configuration information needs to be updated (for example, a value of CPU type information, storage information, memory information, battery level information, and/or computing power utilization information of the terminal device is less than or greater than a threshold), the terminal device may send the computing power indication information to the network device, so that the network device delivers the updated configuration information, namely, the first configuration information. Then, the terminal device may update the initial configuration information based on the first configuration information, to obtain the computing power configuration information that is suitable for the terminal device.

In a possible implementation of the third aspect, the method further includes: The terminal device sends a response message or an acknowledgment message of the first message.

Based on the foregoing technical solution, after the terminal device receives the first message, the terminal device may further send the response message or the acknowledgment message of the first message, so that the network device determines, based on the response message or the acknowledgment message of the first message, that the terminal device has received the first message, and configures the at least one computing power instance by using the first configuration information included in the first message.

A fourth aspect of this application provides a communication method. The method is performed by a network device, the method is performed by some components (such as a processor, a chip, or a chip system) in a network device, or the method may be implemented by a logical module or software that can implement all or some functions of a network device. In the third aspect and the possible implementations of the third aspect, an example in which the communication method is performed by a network device is used for description. In the method, the network device receives computing power indication information from a terminal device; and the network device sends a first message to the terminal device based on the computing power indication information, where the first message includes first configuration information, and the first configuration information is used to configure at least one computing power instance.

Based on the foregoing technical solution, after the network device receives the computing power indication information, the network device generates, based on the computing power indication information, and sends the first message including the first configuration information, where the first configuration information is used to configure the at least one computing power instance, so that the terminal device receives the first configuration information. In other words, after the network device receives related information for indicating computing power of the terminal device, the network device configures, based on the information, the computing power instance executed by the terminal device. Therefore, a wireless network system in which the terminal device and the network device are located may become dual infrastructure for communication, connection, and computing. In a manner in which the network device configures the computing power of the terminal device based on the first configuration information, the terminal device serves as a computing node to participate in a computing process corresponding to a computing power instance. This can effectively improve a computing resource reuse degree, to increase network revenue.

In a possible implementation of the fourth aspect, before the network device receives the computing power indication information from the terminal device, the method further includes: The network device sends a second message to the terminal device, where the second message includes initial configuration information, and the initial configuration information is used to configure at least one computing power instance.

Based on the foregoing technical solution, before the network device receives the computing power indication information, the network device may further send the second message including the initial configuration information, where the initial configuration information is used to configure the at least one computing power instance. Then, when the terminal device determines that the initial configuration information needs to be updated (for example, a value of CPU type information, storage information, memory information, battery level information, and/or computing power utilization information of the terminal device is less than or greater than a threshold), the terminal device may send the computing power indication information to the network device, so that the network device delivers the updated configuration information, namely, the first configuration information. Then, the terminal device may update the initial configuration information based on the first configuration information, to obtain the computing power configuration information that is suitable for the terminal device.

In a possible implementation of the fourth aspect, the method further includes: The network device receives a response message or an acknowledgment message of the first message from the terminal device.

Based on the foregoing technical solution, after the network device sends the first message, the network device may further receive the response message or the acknowledgment message of the first message, so that the network device determines, based on the response message or the acknowledgment message of the first message, that the terminal device has received the first message, and configures the at least one computing power instance by using the first configuration information included in the first message.

In a possible implementation of the third aspect or the fourth aspect, the computing power indication information includes first indication information, and the first indication information indicates a computing power status of the terminal device.

Based on the foregoing technical solution, the computing power indication information sent by the terminal device includes the first indication information for indicating the computing power status of the terminal device. In other words, before the terminal device receives the first message, the terminal device may send, to the network device, the first indication information for indicating the computing power status of the terminal device, so that the network device may use the computing power status of the terminal device as a basis for the network device to send the first message. Therefore, the network device may perform, based on the computing power status of the terminal device, dynamic adjustment on the computing power instance executed by the terminal device (and/or the computing power resource corresponding to the computing power instance executed by the terminal device).

In a possible implementation of the third aspect or the fourth aspect, the first indication information includes at least one of the following:
CPU type information, storage information, memory information, battery level information, and computing power utilization information.

In a possible implementation of the third aspect or the fourth aspect, the computing power indication information includes second indication information, and the second indication information indicates computing power resource information and/or a computing power instance expected by the terminal device.

Based on the foregoing technical solution, the computing power indication information sent by the terminal device includes the second indication information for indicating the computing power resource information and/or the computing power instance expected by the terminal device. In other words, before the terminal device receives the first message, the terminal device may send, to the network device, the second indication information for indicating the computing power resource information and/or the computing power instance expected by the terminal device, so that the network device may use the computing power resource information and/or the computing power instance expected by the terminal device as a basis for the network device to send the first message. Therefore, the network device may perform, based on the computing power resource information and/or the computing power instance expected by the terminal device, dynamic adjustment on the computing power instance executed by the terminal device (and/or the computing power resource corresponding to the computing power instance executed by the terminal device), so that the provided configuration information can meet a requirement of the terminal device.

In a possible implementation of the third aspect or the fourth aspect, the computing power indication information includes third indication information, and the third indication information indicates computing power adjustment information of the terminal device.

Based on the foregoing technical solution, the computing power indication information sent by the terminal device includes the third indication information for indicating the computing power adjustment information of the terminal device. In other words, before the terminal device receives the first message, the terminal device may send, to the network device, the second indication information for indicating the computing power adjustment information of the terminal device, so that the network device may use the computing power adjustment information of the terminal device as a basis for the network device to send the first message. Therefore, the network device may perform, based on the computing power adjustment information of the terminal device, dynamic adjustment on the computing power instance executed by the terminal device (and/or the computing power resource corresponding to the computing power instance executed by the terminal device), so that the provided configuration information can meet a computing power adjustment requirement of the terminal device.

In a possible implementation of the third aspect or the fourth aspect, the third indication information includes:
memory information, battery level information, and computing power utilization information.

In a possible implementation of the third aspect or the fourth aspect, the first message further includes second configuration information, where the second configuration information is used to configure information of at least one computing power resource, and the information of the at least one computing power resource is associated with the at least one computing power instance.

In a possible implementation of the third aspect or the fourth aspect, that the at least one computing power resource is associated with the at least one computing power instance includes:
each of the at least one computing power resource is in a one-to-one correspondence with each of the at least one computing power instance; or
one of the at least one computing power resource corresponds to one or more computing power instances in the at least one computing power instance.

Optionally, a computing power resource corresponding to the at least one computing power resource is greater than or equal to a maximum quantity of computing power resources required by the at least one computing power instance.

Based on the foregoing technical solution, the at least one computing power resource configured by using the second configuration information is associated with the at least one computing power instance configured by using the first configuration information. A computing power resource in the at least one computing power resource may be in a one-to-one correspondence or may be in a one-to-one or one-to-many correspondence with a computing power instance in the at least one computing power instance, to improve flexibility of a process in which the network device configures a computing power instance and a computing power resource. In addition, if the network device indicates the first computing power instance based on the first information, flexibility of the process in which the network device indicates the first computing power instance and/or the computing power resource corresponding to the first computing power instance may also be improved.

In addition, if one computing power resource in the at least one computing power resource corresponds to a plurality of computing power instances in the at least one computing power instance, that is, if the computing power resource in the at least one computing power resource is in the one-to-many correspondence with the computing power instance in the at least one computing power instance, because the terminal device may execute a plurality of different computing power instances on the computing power resource, the terminal device does not need to determine (or reconfigure, prepare, activate, or the like) a new computing power resource when performing a switching process of the computing power instance, so that the terminal device can quickly switch between a plurality of different computing power instances corresponding to the computing power resource.

In a possible implementation of the third aspect or the fourth aspect, the information of the at least one computing power resource includes at least one of the following:
CPU type information, storage information, execution duration information, memory information, or battery level information.

In a possible implementation of the third aspect or the fourth aspect, the computing power instance in the at least one computing power instance includes at least one of the following:
execution duration information, computing power information, model information, a split learning location, an inference segmentation point location, or local epochs of federated learning.

A fifth aspect of this application provides a communication apparatus. The apparatus can implement the method in any one of the first aspect or the possible implementations of the first aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a terminal device, or the apparatus may be a logical module or software that can implement all or some functions of a terminal device.

The apparatus includes a transceiver unit and a processing unit;
the transceiver unit is configured to receive a first message from a network device, where the first message includes first configuration information, and the first configuration information includes configuration information of at least one computing power instance;
the processing unit is configured to obtain first information, where the first information indicates a first computing power instance, and the first computing power instance is a computing power instance in the at least one computing power instance; and
the processing unit is further configured to execute the first computing power instance based on the first information.

In a possible implementation of the fifth aspect, the first message further includes second configuration information, the second configuration information includes configuration information of at least one computing power resource, and the at least one computing power resource is associated with the at least one computing power instance.

In a possible implementation of the fifth aspect, the first information includes an identifier of the first computing power instance and/or an identifier of computing power resource information corresponding to the first computing power instance; and
that the processing unit is configured to obtain first information includes:
the processing unit is configured to control the transceiver unit to receive the first information, where the first information is carried in L1 control information, L2 control information, or an L3 message.

In a possible implementation of the fifth aspect,
the transceiver unit is further configured to receive a reference signal RS; and
the transceiver unit is further configured to send a measurement result corresponding to the RS.

In a possible implementation of the fifth aspect,
the first computing power instance is a default computing power instance; and/or
the computing power resource information corresponding to the first computing power instance is default computing power resource information.

In a possible implementation of the fifth aspect, that the processing unit is configured to obtain first information includes:
the processing unit generates the first information when at least one of the following is met:
a first timer expires, where configuration information of the first timer is included in the first message;
a battery level of the terminal device is less than a first threshold; or
the terminal device enters a radio resource control idle RRC idle state.

In a possible implementation of the fifth aspect,
the transceiver unit is further configured to send first indication information to the network device, where the first indication information indicates a computing power status of the terminal device.

In a possible implementation of the fifth aspect,
the transceiver unit is further configured to send second indication information to the network device, where the second indication information indicates computing power resource information and/or a computing power instance expected by the terminal device.

In a possible implementation of the fifth aspect,
when the processing unit executes the first computing power instance based on the first information, the transceiver unit is further configured to send third indication information, where the third indication information indicates computing power adjustment information of the terminal device; and
the transceiver unit is further configured to receive third configuration information from the network device, where the third configuration information is used to update the first configuration information, and/or the third configuration information is used to update the second configuration information.

It should be noted that, for an implementation process of the communication apparatus provided in the fifth aspect of this application, refer to the implementation process described in the first aspect, and corresponding technical effect is achieved. Details are not described herein again.

A sixth aspect of this application provides a communication apparatus. The apparatus can implement the method in any one of the second aspect or the possible implementations of the second aspect. The apparatus includes a corresponding unit or module configured to perform the method. The unit or module included in the apparatus can be implemented by software and/or hardware. For example, the apparatus may be a network device, or the apparatus may be a component (for example, a processor, a chip, or a chip system) in a network device, or the apparatus may be a logical module or software that can implement all or some functions of a network device.

The apparatus includes a transceiver unit and a processing unit;
the processing unit is configured to generate a first message, where the first message includes first configuration information, and the first configuration information includes configuration information of at least one computing power instance; and
the transceiver unit is configured to send the first message.

In a possible implementation of the sixth aspect, the first message further includes second configuration information, the second configuration information includes configuration information of at least one computing power resource, and the at least one computing power resource is associated with the at least one computing power instance.

In a possible implementation of the sixth aspect,
the transceiver unit is further configured to send first information, where the first information indicates a first computing power instance, the first computing power instance is a computing power instance in the at least one computing power instance, and the first information includes an identifier of the first computing power instance and/or an identifier of computing power resource information corresponding to the first computing power instance; and
the first information is carried in L1 control information, L2 control information, or an L3 message.

In a possible implementation of the sixth aspect,
the transceiver unit is further configured to send a reference signal RS;
the transceiver unit is further configured to receive a measurement result corresponding to the RS; and
the processing unit is further configured to generate the first information based on the measurement result corresponding to the RS.

In a possible implementation of the sixth aspect,
the transceiver unit is further configured to receive first indication information from a terminal device, where the first indication information indicates a computing power status of the terminal device; and
the processing unit is further configured to determine the first information based on the first indication information.

In a possible implementation of the sixth aspect,
the transceiver unit is further configured to receive second indication information from a terminal device, where the second indication information indicates computing power resource information and/or a computing power instance expected by the terminal device; and
the processing unit is further configured to determine the first information based on the second indication information.

In a possible implementation of the sixth aspect,
the transceiver unit is further configured to receive third indication information from a terminal device, where the third indication information indicates computing power adjustment information of the terminal device; and
the processing unit is further configured to send third configuration information based on the third indication information, where the third configuration information is used to update the first configuration information, and/or the third configuration information is used to update the second configuration information.

In a possible implementation of the fifth aspect or the sixth aspect, the computing power instance in the at least one computing power instance includes at least one of the following:
execution duration information, computing power information, model information, a split learning location, an inference segmentation point location, or local epochs of federated learning.

In a possible implementation of the fifth aspect or the sixth aspect, the information of the at least one computing power resource includes at least one of the following:
CPU type information, storage information, execution duration information, memory information, or battery level information.

In a possible implementation of the fifth aspect or the sixth aspect, that the at least one computing power resource is associated with the at least one computing power instance includes:
each of the at least one computing power resource is in a one-to-one correspondence with each of the at least one computing power instance; or
one of the at least one computing power resource corresponds to one or more computing power instances in the at least one computing power instance.

Optionally, a computing power resource corresponding to the at least one computing power resource is greater than or equal to a maximum quantity of computing power resources required by the at least one computing power instance.

In a possible implementation of the fifth aspect or the sixth aspect, the first indication information includes at least one of the following:
CPU type information, storage information, memory information, battery level information, and computing power utilization information.

In a possible implementation of the fifth aspect or the sixth aspect, the third indication information includes:
memory information, battery level information, and computing power utilization information.

It should be noted that, for an implementation process of the communication apparatus provided in the sixth aspect of this application, refer to the implementation process described in the second aspect, and corresponding technical effect is achieved. Details are not described herein again.

A seventh aspect of this application provides a communication apparatus. The apparatus can implement the method in any one of the third aspect or the possible implementations of the third aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a terminal device, or the apparatus may be a logical module or software that can implement all or some functions of a terminal device.

The apparatus includes a transceiver unit and a processing unit;
the processing unit is configured to determine computing power indication information;
the transceiver unit is configured to send the computing power indication information to a network device; and
the transceiver unit is further configured to receive a first message from the network device, where the first message includes first configuration information, and the first configuration information is used to configure at least one computing power instance.

In a possible implementation of the seventh aspect,
the transceiver unit is further configured to receive a second message from the network device, where the second message includes initial configuration information, and the initial configuration information is used to configure at least one computing power instance.

In a possible implementation of the seventh aspect,
the transceiver unit is further configured to send a response message or an acknowledgment message of the first message.

It should be noted that, for an implementation process of the communication apparatus provided in the seventh aspect of this application, refer to the implementation process described in the third aspect, and corresponding technical effect is achieved. Details are not described herein again.

An eighth aspect of this application provides a communication apparatus. The apparatus can implement the method in any one of the fourth aspect or the possible implementations of the fourth aspect. The apparatus includes a corresponding unit or module configured to perform the method. The unit or module included in the apparatus can be implemented by software and/or hardware. For example, the apparatus may be a network device, or the apparatus may be a component (for example, a processor, a chip, or a chip system) in a network device, or the apparatus may be a logical module or software that can implement all or some functions of a network device.

The apparatus includes a transceiver unit and a processing unit;
the transceiver unit is configured to receive computing power indication information from a terminal device;
the processing unit is configured to determine a first message from the terminal device based on the computing power indication information, where the first message includes first configuration information, and the first configuration information is used to configure at least one computing power instance; and
the transceiver unit is further configured to send the first message.

In a possible implementation of the eighth aspect,
the transceiver unit is further configured to send a second message to the terminal device, where the second message includes initial configuration information, and the initial configuration information is used to configure at least one computing power instance.

In a possible implementation of the eighth aspect,
the transceiver unit is further configured to receive a response message or an acknowledgment message of the first message from the terminal device.

In a possible implementation of the seventh aspect or the eighth aspect, the computing power indication information includes first indication information, and the first indication information indicates a computing power status of the terminal device.

In a possible implementation of the seventh aspect or the eighth aspect, the first indication information includes at least one of the following:
CPU type information, storage information, memory information, battery level information, and computing power utilization information.

In a possible implementation of the seventh aspect or the eighth aspect, the computing power indication information includes second indication information, and the second indication information indicates computing power resource information and/or a computing power instance expected by the terminal device.

In a possible implementation of the seventh aspect or the eighth aspect, the computing power indication information includes third indication information, and the third indication information indicates computing power adjustment information of the terminal device.

In a possible implementation of the seventh aspect or the eighth aspect, the third indication information includes:
memory information, battery level information, and computing power utilization information.

In a possible implementation of the seventh aspect or the eighth aspect, the first message further includes second configuration information, where the second configuration information is used to configure information of at least one computing power resource, and the information of the at least one computing power resource is associated with the at least one computing power instance.

In a possible implementation of the seventh aspect or the eighth aspect, that the at least one computing power resource is associated with the at least one computing power instance includes:
each of the at least one computing power resource is in a one-to-one correspondence with each of the at least one computing power instance; or
one of the at least one computing power resource corresponds to one or more computing power instances in the at least one computing power instance.

In a possible implementation of the seventh aspect or the eighth aspect, the information of the at least one computing power resource includes at least one of the following:
CPU type information, storage information, execution duration information, memory information, or battery level information.

In a possible implementation of the seventh aspect or the eighth aspect, the computing power instance in the at least one computing power instance includes at least one of the following:
execution duration information, computing power information, model information, a split learning location, an inference segmentation point location, or local epochs of federated learning.

It should be noted that, for an implementation process of the communication apparatus provided in the eighth aspect of this application, refer to the implementation process described in the fourth aspect, and corresponding technical effect is achieved. Details are not described herein again.

A ninth aspect of the embodiments of this application provides a communication apparatus, including at least one processor. The at least one processor is coupled to a memory. The memory is configured to store a program or instructions. The at least one processor is configured to execute the program or the instructions, so that the apparatus implements the method according to any one of the first aspect or the possible implementations of the first aspect, the apparatus implements the method according to any one of the second aspect or the possible implementations of the second aspect, the apparatus implements the method according to any one of the third aspect or the possible implementations of the third aspect, or the apparatus implements the method according to any one of the fourth aspect or the possible implementations of the fourth aspect.

A tenth aspect of the embodiments of this application provides a computer-readable storage medium storing one or more computer-executable instructions. When the computer-executable instructions are executed by a processor, the processor performs the method according to any one of the first aspect or the possible implementations of the first aspect, the processor performs the method according to any one of the second aspect or the possible implementations of the second aspect, the processor performs the method according to any one of the third aspect or the possible implementations of the third aspect, or the processor performs the method according to any one of the fourth aspect or the possible implementations of the fourth aspect.

An eleventh aspect of the embodiments of this application provides a computer program product (or referred to as a computer program) storing one or more computers. When the computer program product is executed by a processor, the processor performs the method according to any one of the first aspect or the possible implementations of the first aspect, the processor performs the method according to any one of the second aspect or the possible implementations of the second aspect, the processor performs the method according to any one of the third aspect or the possible implementations of the third aspect, or the processor performs the method according to any one of the fourth aspect or the possible implementations of the fourth aspect.

A twelfth aspect of the embodiments of this application provides a chip system. The chip system includes at least one processor, configured to support a communication apparatus in implementing the function in any one of the first aspect or the possible implementations of the first aspect, configured to support a communication apparatus in implementing the function in any one of the second aspect or the possible implementations of the second aspect, configured to support a communication apparatus in implementing the function in any one of the third aspect or the possible implementations of the third aspect, or configured to support a communication apparatus in implementing the function in any one of the fourth aspect or the possible implementations of the fourth aspect.

In a possible design, the chip system may further include a memory, configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A thirteenth aspect of the embodiments of this application provides a communication system. The communication system includes the communication apparatuses in the fifth aspect and the sixth aspect, the communication system includes the communication apparatuses in the seventh aspect and the eighth aspect, and/or the communication system includes the communication apparatus in the ninth aspect.

For technical effects brought by any design in the fifth aspect to the twelfth aspect, refer to the technical effects brought by different implementations in the first aspect to the fourth aspect. Details are not described herein again.

It may be learned from the foregoing technical solution that the terminal device receives, from the network device, the first message including the first configuration information, where the first configuration information includes the configuration information of the at least one computing power instance. After the terminal device obtains the first information for indicating the first computing power instance in the at least one computing power instance, the terminal device executes the first computing power instance based on the first information. In other words, after the terminal device configures the computing power instance based on the indication of the network device, the terminal device executes the corresponding computing power instance based on the first information. Therefore, the wireless network system in which the terminal device and the network device are located may become dual infrastructure for communication, connection, and computing. In the manner in which the network device configures the computing power of the terminal device based on the first configuration information, the terminal device serves as the computing node to participate in the computing process corresponding to the computing power instance. This can effectively improve a computing resource reuse degree, to increase network revenue.

### BRIEF DESCRIPTION OF DRAWINGS

FIG. 1 is a schematic diagram of a communication system according to this application;
FIG. 2a is a schematic diagram of a network architecture related to computing power according to this application;
FIG. 2b is another schematic diagram of a network architecture related to computing power according to this application;
FIG. 3a is a schematic diagram of communication protocol stack interaction according to this application;
FIG. 3b is a schematic diagram of a communication system according to this application;
FIG. 4 is a schematic diagram of a communication method according to this application;
FIG. 5a is another schematic diagram of a communication method according to this application;
FIG. 5b is another schematic diagram of a communication method according to this application;
FIG. 6a is another schematic diagram of a communication method according to this application;
FIG. 6b is another schematic diagram of a communication method according to this application;
FIG. 6c is another schematic diagram of a communication method according to this application;
FIG. 7 is another schematic diagram of a communication method according to this application;
FIG. 8 is another schematic diagram of a communication method according to this application;
FIG. 9 is a schematic diagram of a communication apparatus according to this application;
FIG. 10 is another schematic diagram of a communication apparatus according to this application;
FIG. 11 is another schematic diagram of a communication apparatus according to this application; and
FIG. 12 is another schematic diagram of a communication apparatus according to this application.

### DESCRIPTION OF EMBODIMENTS

The following describes technical solutions in embodiments of this application with reference to accompanying drawings in embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.
(1) A terminal device may be a wireless terminal device that can receive scheduling and indication information of a network device. The wireless terminal device may be a device that provides voice and/or data connectivity for a user, a handheld device with a wireless connection function, or another processing device connected to a wireless modem.

The terminal device may communicate with one or more core networks or the Internet through a radio access network (radio access network, RAN). The terminal device may be a mobile terminal device such as a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the wireless terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), customer premises equipment (customer premises equipment, CPE), a terminal (terminal), user equipment (user equipment, UE), a mobile terminal (mobile terminal, MT), or the like.

By way of example and not limitation, in embodiments of this application, the terminal device may alternatively be a wearable device. The wearable device may also be referred to as a wearable intelligent device, an intelligent wearable device, or the like, and is a general term for wearable devices that are intelligently designed and developed for daily wear by using a wearable technology, for example, glasses, gloves, watches, clothes, and shoes. The wearable device is a portable device that is worn on a body directly or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without relying on smartphones, for example, smart watches or smart glasses, and include devices that focus only on a specific type of application function and need to be used together with other devices such as smartphones, for example, various smart bands, smart helmets, or smart jewelry for monitoring physical signs.

In addition, the terminal device may alternatively be a terminal device in a future communication system (for example, a 6^{th} generation (6^{th} generation, 6G) communication system), a terminal device in a future evolved public land mobile network (public land mobile network, PLMN), or the like. For example, a 6G network may further extend a form and a function of a 5^{th} generation (5^{th} generation, 5G) communication terminal. A 6G terminal includes but is not limited to a vehicle, a cellular network terminal (a function of a converged satellite terminal), an uncrewed aerial vehicle, and an IoT.

(2) The network device may be a device in a wireless network. For example, the network device may be a RAN node (or device) that connects the terminal device to the wireless network, and may also be referred to as a base station. Currently, examples of some RAN devices are: a base station gNB (gNodeB), a transmission reception point (transmission reception point, TRP), an evolved NodeB (evolved NodeB, eNB), a radio network controller (radio network controller, RNC), a NodeB (NodeB, NB), a home base station (for example, a home evolved NodeB or a home NodeB, HNB), a base band unit (base band unit, BBU), or a wireless fidelity (wireless fidelity, Wi-Fi) access point AP, or the like in a 5G communication system. In addition, in a network structure, the network device may include a central unit (centralized unit, CU) node, a distributed unit (distributed unit, DU) node, or a RAN device including a CU node and a DU node.

The network device can send configuration information (for example, carried in a scheduling message and/or an indication message) to the terminal device. The terminal device further performs network configuration based on the configuration information, so that the network configurations of the network device and the terminal device are aligned. Alternatively, through a network configuration preset in the network device and a network configuration preset in the terminal device, the network configurations of the network device and the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4^{th} generation (4^{th} generation, 4G) network; and a network element, for example, an access and mobility management function (access and mobility management function, AMF), a user plane function (user plane function, UPF), or a session management function (session management function, SMF) in a 5G network. In addition, the core network device may further include another core network device in the 5G network and a next generation network of the 5G network.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is for describing the technical solutions provided in embodiments of this application.

(3) Configuration and preconfiguration: In this application, both configuration and preconfiguration are used. Configuration means that the base station/server sends configuration information of some parameters or parameter values to the terminal by using a message or signaling, so that the terminal determines a communication parameter or a transmission resource based on the values or the information. Preconfiguration is similar to configuration, and may mean that the base station/server negotiates parameter information or parameter values with the terminal device in advance, may mean that parameter information or parameter values used by the base station/server or the terminal device are specified according to a standard protocol, or may mean that parameter information or parameter values are prestored in the base station/server or the terminal device. This is not limited in this application.

Further, these values and parameters may be changed or updated.

(4) The terms "system" and "network" in embodiments of this application may be used interchangeably. "A plurality of" means two or more than two. "And/or" describes an association relationship between associated objects and represents that three relationships may exist. For example, A and/or B may represent the following cases: Only A exists, both A and B exist, and only B exists, where A and B each may be in a singular or plural form. The character "/" generally indicates an "or" relationship between the associated objects. "At least one of the following items (pieces)" or a similar expression thereof refers to any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

In this application, unless otherwise specified, for same or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

This application may be applied to a long term evolution (long term evolution, LTE) system, a new radio (new radio, NR) system, or another communication system (for example, 6G). The communication system includes a network device and a terminal device. The network device serves as a configuration information sending entity. The terminal device serves as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity.

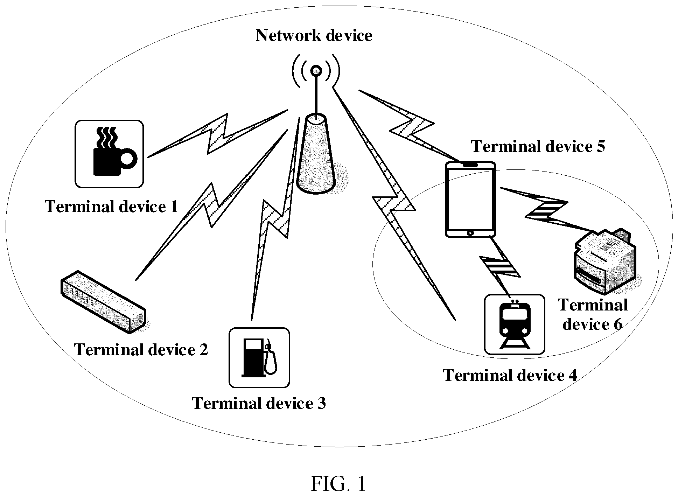

FIG. 1 is a schematic diagram of a communication system according to this application. FIG. 1 shows an example of a network device 101 and six terminal devices. The six terminal devices are respectively a terminal device 1, a terminal device 2, a terminal device 3, a terminal device 4, a terminal device 5, a terminal device 6, and the like. In the example shown in FIG. 1, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1, the configuration information sending entity may be a network device. The configuration information receiving entity may be a terminal device 1 to a terminal device 6. In this case, the network device and the terminal device 1 to the terminal device 6 form a communication system. In the communication system, the terminal device 1 to the terminal device 6 may send uplink data to the network device. The network device needs to receive uplink data sent by the terminal device 1 to the terminal device 6. In addition, the network device may send the configuration information to the terminal device 1 to the terminal device 6.

For example, in FIG. 1, UE4 to UE6 may also form a communication system. The terminal device 5 serves as a network device, that is, a configuration information sending entity. The terminal device 4 and the terminal device 6 serve as terminal devices, that is, configuration information receiving entities. For example, in an Internet of Vehicles system, the terminal device 5 separately sends configuration information to the terminal device 4 and the terminal device 6, and receives uplink data sent by the terminal device 4 and the terminal device 6. Correspondingly, the terminal device 4 and the terminal device 6 receive the configuration information sent by the terminal device 5, and send the uplink data to the terminal device 5.

The communication system shown in FIG. 1 is a typical application scenario in wireless communication. Generally, wireless communication means transmission communication between two or more communication nodes without using a conductor or a cable. The communication nodes generally include a network device and a terminal device.

Currently, in a wireless communication system, a communication node generally has a signal sending and receiving capability and a computing capability. For example, the communication node is a terminal device having a computing capability. The computing capability of the terminal device needs to provide computing power support for the signal sending and receiving capability (for example, calculation of a time domain resource and a frequency domain resource that carry a signal), to implement communication between the terminal device and another communication node. In addition, the computing capability of the terminal device needs to provide computing power support for computing of a local application (for example, calculation of the generation and display of data such as language, text, or images), to implement presentation of the local application on the terminal device. In other words, a computing capability of a current communication node is to support communication between different communication nodes and support presentation of a local application on the communication node.

However, in a future communication network, different communication nodes need to communicate, and may also need to consider a computing capability, to implement network endogenous computing power in a communication system. The following describes an example of an implementation that has computing power in a communication system.

In a computing power implementation, content related to mobile/multi-access edge computing (mobile/multi-access edge computing, MEC) standards is released by European Telecommunications Standards Institute (European telecommunications standards institute, ETSI) in 2016. The MEC may be considered as a cloud server that runs on an edge of a mobile network and runs a specific task. The MEC defined by ETSI is a platform that provides a capability based on an IT architecture and cloud computing for a user in a RAN network close to a mobile user.

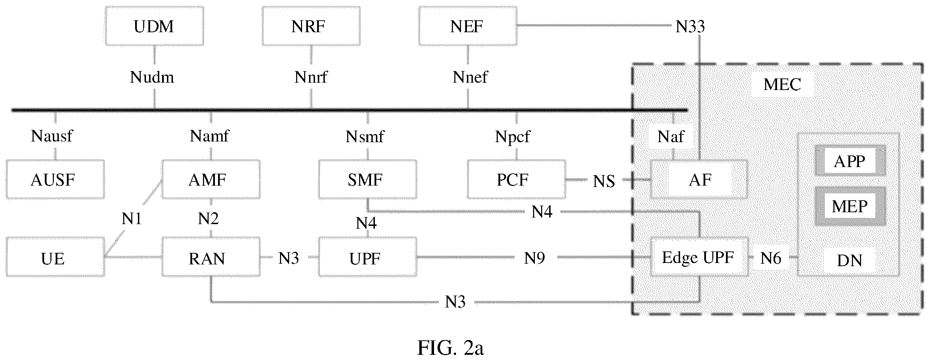

For example, FIG. 2a is a schematic diagram of a network element architecture related to MEC. In the schematic diagram, a terminal device is denoted as UE for description.

In FIG. 2a, a network element other than the UE may be considered as a network device, and the network device includes:
a radio access network (radio access network, RAN), an access and mobility management function (access and mobility management function, AMF), a user plane function (user plane function, UPF), a session management function (session management function, SMF), a policy control function (policy control function, PCF), an authorization server function (authentication server function, AUSF), unified data management (unified data management, UDM), a network storage function (NF repository function, NRF), a network exposure function (network exposure function, NEF), a data network (data network, DN), an application function (application function, AF), and a mobile/multi-access edge computing platform (mobile/multi-access edge computing platform, MEP).

In addition, as shown in FIG. 2a, in a network, MEC may include functions related to network elements such as an AF, a DN, and an edge UPF.

With reference to the 5G architecture defined by 3GPP, that is, content in the TS.23501 system architecture for the 5G system (TS.23501 System architecture for the 5G System) standard document, an actual deployment location of the MEC in the wireless network generally corresponds to a local user plane function (user plane function, UPF) of a 5G core network (for example, a UPF in FIG. 2a). The local UPF implements local service offloading based on an N6 interface between a local UPF and a local data network (DN). This implements local service processing and acceleration. It may be learned from the foregoing 3GPP 5G system architecture that the MEC is an invisible network element in the 3GPP system architecture, and does not belong to a network architecture scope defined by 3GPP. Therefore, the MEC does not directly affect the 3GPP system architecture.

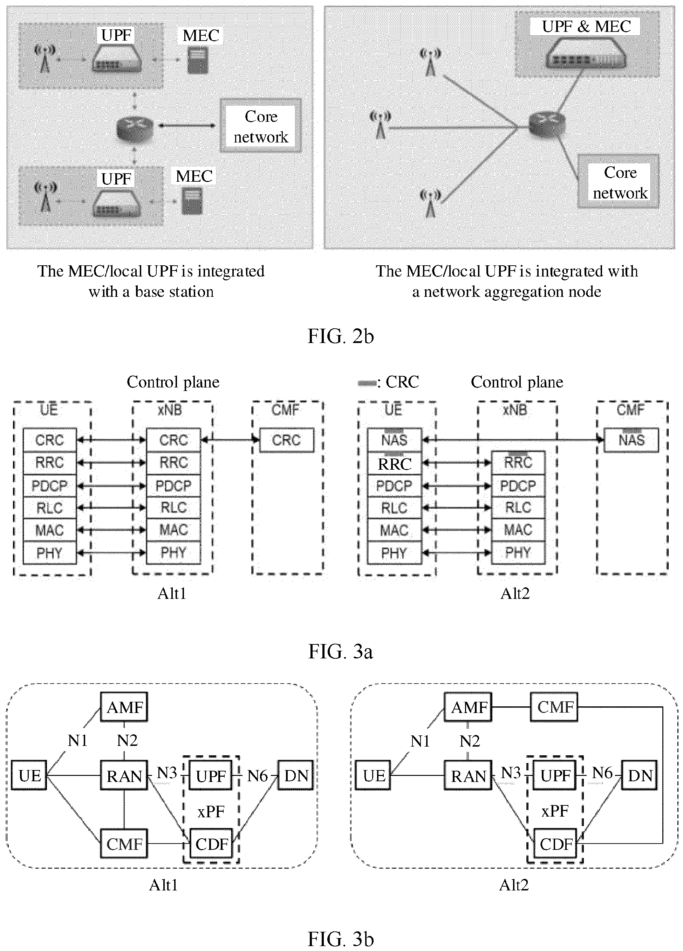

The following uses an example in which an access network device is a base station, and further description is provided with reference to the manner shown in FIG. 2b.

Optionally, in an implementation of "the MEC/local UPF is integrated with a network aggregation node" shown in FIG. 2b, the MEC and the UPF may be located in the network aggregation node between the access network device and a core network device. An MEC application is combined with an existing core network data local offloading mechanism of 3GPP, so that a processing location of service data sinks from a remote data network (generally a public cloud) to the local MEC. This is the essential reason for the MEC to accelerate services. That is, an application that processes service data is pushed from a physical deployment location to a location near a core network of the wireless network, that is, co-deployed with the network element UPF of the core network.

Optionally, in an implementation of "the MEC/local UPF is integrated with an access network" shown in FIG. 2b, the UPF is disposed in the base station, and the MEC is externally connected to the UPF. In other words, the MEC may be further deployed near the base station, that is, deployed on a same physical node as the base station. Deployed MEC meets industry requirements for real-time performance and data security to some extent. However, there is still room for further optimization from the perspective of a 3GPP logical architecture and a data protocol processing process. Because a communication network capability is open to a network management platform, distributed external computing power is also displayed on the network management platform. Therefore, a service agency such as an artificial intelligence (artificial intelligence, AI) application may comprehensively consider network information and distributed computing power resources, and perform service optimization, deployment, adjustment, and the like.

It should be understood that names of network elements/devices and names of interfaces in the examples shown in FIG. 2a and FIG. 2b are merely examples, and may alternatively be other descriptions based on the foregoing definitions of the terminal device and the network device. This is not limited herein.

However, service deployment such as AI in computing power is implemented on a management plane, and is not dynamic. Therefore, network and computing power cannot be unified on a control plane, and user movement and network changes cannot be responded to in a timely manner. Network connections and service connections are independent and belong to an overlay model. Therefore, resource usage cannot be optimal sometimes.

In addition, in a new computing power network architecture, each network element may have control and forwarding capabilities, and also a computing capability. In addition to the network element, computing nodes are deployed in the network. Computing power generated in this computing-network integration mode is referred to as network endogenous computing power. At the beginning of network design, computing power is considered as a basic element of the network. Computing power is widely distributed in the network. That is, computing power is widely distributed in the cloud, edge, device, and intermediate network elements. Computing power is integrated into the network. Computing power services, connection services, and services that take computing power and connection into account are all basic services provided by the network. Network endogenous computing power can promote the development and deployment of endogenous intelligence, better support ubiquitous base stations and terminals with sensing, communication, and computing capabilities, implement large-scale intelligent distributed collaborative services, maximize the effectiveness of communication and computing power in the network, and adapt to data distribution and protect data privacy. In the new network architecture, control planes of network elements and computing units are streamlined. This can make up for a shortage of computing power convergence type 2, and can respond to mobile and network changes in a timely manner. Network endogenous computing power can promote the generation and development of future intelligent applications, such as immersive cloud extended reality (extended reality, XR), holographic communication, sensory interconnection, intelligent interaction, communication perception, and digital twin.

Optionally, the XR includes a virtual reality (virtual reality, VR) technology, augmented reality (augmented reality, AR), mixed reality (mixed reality, MR), or the like.

It may be learned from the foregoing content that, in the 5G MEC solution, the UPF may be integrated with the MEC; and the MEC and the UPF can even be deployed on the base station and integrated with the base station. In other words, 5G also introduces the computing capability, but does not go far enough, and basically retains the scope and global architecture features of products of the previous generation, and focuses on the sinking of the computing capability. The network and computing parts are loosely coupled, and are not a native capability of the architecture. Therefore, there is room for further improvement in efficiency, deployment costs, security, privacy protection, and the like. In the 5G MEC solution, the user plane network element UPF of the core network may be integrated with the MEC; and the MEC and the UPF can even be deployed on the base station and integrated with the base station. However, in terms of a logical architecture and a control and management mechanism, there are two independent systems. As a result, when a connection policy needs to be adjusted due to changes of computing power or computing power needs to be adjusted due to changes of a connection pipeline, an adjustment delay of the other party is large, for example, is a minute-level adjustment delay. Data required for computing needs to be routed to the MEC through the local (local) UPF for computing and migration. During computing and migration, a transmission delay of the computing data is large. AI heterogeneous resources are distributed and hybrid, are completely different from cloud (Cloud) AI resources in distribution and types, and are no longer applicable to management and control of connections and computing power on the streamlined management plane. Therefore, it is difficult to manage connections and computing power on the streamlined management plane to support inclusive services that require deep coupling between native computing and communication, such as endogenous intelligence and endogenous perception of future communication networks (for example, 6G).

In conclusion, in a communication network having a network device and a terminal device, how to implement configuration and execution of computing power is a technical problem to be urgently resolved.

To resolve the foregoing problem, embodiments of this application provide a communication method and a communication apparatus. In a manner in which a network device configures a computing power of a terminal device based on first configuration information, the terminal device serves as a computing node to participate in a computing process corresponding to a computing power instance. This can effectively improve a computing resource reuse degree, to increase network revenue. The following describes this application from multiple aspects with reference to the accompanying drawings.

In embodiments of this application, different nodes (including a network device and a terminal device) in a communication network can complete configuration and execution of computing power in a process of interaction at a computing resource control (computing resource control, CRC) protocol layer.

In the following implementation examples shown in FIG. 3a and FIG. 3b, a terminal device is denoted as UE, and an access network device included in a network device is denoted as xNB. The network device further includes a computing management function (computing management function, CMF) network element. In addition, an example in which the CMF network element is configured to implement an information processing process related to the CRC protocol layer is used for description.

It should be noted that the CMF is a network element for implementing a logical function, and may be deployed on a core network device or an access network device. This is not limited herein.

It should be understood that names of network elements/devices and names of interfaces in the following examples are merely examples, and may alternatively be other descriptions based on the foregoing definitions of the terminal device and the network device. This is not limited herein.

Optionally, as shown in Manner 1 (Alt1) in FIG. 3a, a protocol layer related to control plane interaction between the terminal device and the network device includes one or more of the following: a radio resource control (radio resource control, RRC) protocol, a packet data convergence protocol (packet data convergence protocol, PDCP), a radio link control (radio link control, RLC) protocol, a media access control (media access control, MAC) layer protocol, or a physical (physical, PHY) layer protocol. A CRC protocol layer is added in this application, so that the UE, the base station, and the CMF all have a CRC protocol layer, that is, a computing resource control layer.

Further, optionally, Alt1 in FIG. 3b is a schematic diagram of network element interaction corresponding to Alt1 in FIG. 3a. The added CMF in this application may be separately connected to the UE and a RAN, and connected to a data network (data network, DN) by using an xPF that includes a UPF and a CDF.

Optionally, as shown in Manner 2 (Alt2) in FIG. 3a, a protocol layer related to control plane interaction between the terminal device and the network device includes one or more of the following: an RRC protocol, a PDCP, an RLC protocol, a MAC layer protocol, or a PHY layer protocol. A CRC protocol layer is added in this application. The CRC protocol layer may be implemented by an information element (information element, IE) of an RRC layer, an RRC container (container), an IE of a non-access stratum (non-access stratum, NAS), or a NAS container (container).

Further, optionally, Alt2 in FIG. 3b is a schematic diagram of network element interaction corresponding to Alt2 in FIG. 3a. The added CMF in this application may be connected to an AMF, and connected to a data network (data network, DN).

In addition, the CMF in this application may be configured to implement at least one of the following:
computing power management;
computing bearer management;
cooperation with a session management function (Session Management Function, SMF), to implement joint connection adjustment for the terminal to use computing services of the base station and the core network through an air interface; or
in a task architecture, the CMF is a part of a task anchor (Task Anchor, TA) function (three elements of AI include computing power, an algorithm, and data, the computing power, the algorithm, the data, and connection are managed and controlled together in the task architecture, the computing management function mainly manages computing power and connection, and therefore the CMF may be considered as a part of the TA function).

In addition, the network device in this application has a new convergence scheduling (convergence scheduling, CS) function, that is, converged control and scheduling of computing power and connection, and may be configured to implement at least one of the following:
the base station determines whether computing data of an internal computing service is locally computed or is routed to an intra-network computing node;
sensing a computing power status and reporting a sensing result;
establishing, modifying, suspending, restoring, or releasing a terminal computing power heterogeneous resource;
controlling computing power;
computing radio bearer management; or
in a task architecture, the CS is a part of a task scheduling (Task Scheduling, TS) function (three elements of AI include computing power, an algorithm, and data, the computing power, the algorithm, the data, and connection are managed and controlled together in the task architecture, the computing management function mainly manages computing power and connection, and therefore the CS may be considered as a part of the TS function).

The following describes this application by using more accompanying drawings and embodiments.

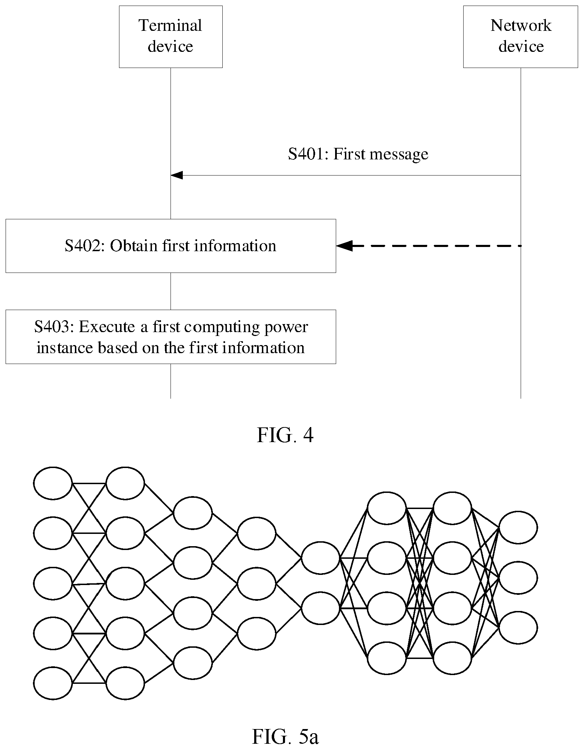

FIG. 4 is a schematic diagram of a communication method according to this application. The method includes the following steps.

S401: A network device sends a first message.

In this embodiment, the network device sends the first message in step S401. Correspondingly, a terminal device receives the first message in step S401. The first message includes first configuration information, and the first configuration information includes configuration information of at least one computing power instance.

In a possible implementation, the computing power instance in the at least one computing power instance includes at least one of the following: execution duration information, computing power information, model information, a split learning location, an inference segmentation point location, or local epochs of federated learning.

In a possible implementation, the first message further includes second configuration information, the second configuration information includes configuration information of at least one computing power resource, and the at least one computing power resource is associated with the at least one computing power instance.

Optionally, the second configuration information is included in another message. In other words, before step S402, the network device further needs to send the second configuration information to the terminal device in another process different from step S401, so that the terminal device receives the second configuration information.

Specifically, the terminal device further receives the second configuration information including the configuration information of the at least one computing power resource, where the at least one computing power resource is associated with the at least one computing power instance. Therefore, when computing power of the terminal device is configured, the terminal device serves as a computing node to participate in a computing process corresponding to a computing power instance, the terminal device determines, based on the second configuration information, a computing power resource subsequently used in a process of executing the computing power instance in the at least one computing power instance.

Optionally, the information of the at least one computing power resource includes at least one of the following:
central processing unit (central processor unit, CPU) type information, storage information, execution duration information, memory information, or battery level information.

In a possible implementation, that the at least one computing power resource is associated with the at least one computing power instance includes:
each of the at least one computing power resource is in a one-to-one correspondence with each of the at least one computing power instance; or
one of the at least one computing power resource corresponds to one or more computing power instances in the at least one computing power instance.

Optionally, a computing power resource corresponding to the at least one computing power resource is greater than or equal to a maximum quantity of computing power resources required by the at least one computing power instance.

Specifically, the at least one computing power resource configured by using the second configuration information is associated with the at least one computing power instance configured by using the first configuration information. A computing power resource in the at least one computing power resource may be in a one-to-one correspondence or may be in a one-to-one or one-to-many correspondence with a computing power instance in the at least one computing power instance, to improve flexibility of a process in which the network device configures a computing power instance and a computing power resource.

In addition, if one computing power resource in the at least one computing power resource corresponds to a plurality of computing power instances in the at least one computing power instance, that is, if the computing power resource in the at least one computing power resource is in the one-to-many correspondence with the computing power instance in the at least one computing power instance, because the terminal device may execute a plurality of different computing power instances on the computing power resource, the terminal device does not need to determine (or reconfigure, prepare, activate, or the like) a new computing power resource when performing a switching process of the computing power instance, so that the terminal device can quickly switch between a plurality of different computing power instances corresponding to the computing power resource.

In a possible implementation, before step S401, the network device may generate the first configuration information based on a plurality of scheduling policies, to configure a computing power instance executed by the terminal device. For example, the network device may generate the first configuration information based on usage of resource information (including a computing power resource, a storage resource, and the like) of the network device, or the network device may receive the indication of another network device (for example, a core network device) to generate the first configuration information. The network device may further generate the first configuration information based on the information reported by the terminal device to provide an adapted computing power configuration for the terminal device.

The following provides a plurality of examples for description by using an example in which the network device generates the first configuration information based on the information reported by the terminal device to provide an adapted computing power configuration for the terminal device.

Example 1: Before the terminal device receives the first message from the network device in step S401, the method further includes: The terminal device sends first indication information to the network device, where the first indication information indicates a computing power status of the terminal device.

Specifically, before the terminal device receives the first message, the terminal device may send, to the network device, the first indication information for indicating the computing power status of the terminal device, so that the network device may use the computing power status of the terminal device as a basis for the network device to send the first message. Therefore, the network device may perform, based on the computing power status of the terminal device, dynamic adjustment on the computing power instance executed by the terminal device (and/or the computing power resource corresponding to the computing power instance executed by the terminal device).

Optionally, the first indication information includes at least one of the following:
CPU type information, storage information, memory information, battery level information, and computing power utilization information.

Example 2: Before the terminal device receives the first message from the network device, the method further includes: The terminal device sends second indication information to the network device, where the second indication information indicates computing power resource information and/or a computing power instance expected by the terminal device.

Specifically, before the terminal device receives the first message, the terminal device may send, to the network device, the second indication information for indicating the computing power resource information and/or the computing power instance expected by the terminal device, so that the network device may use the computing power resource information and/or the computing power instance expected by the terminal device as a basis for the network device to send the first message. Therefore, the network device may perform, based on the computing power resource information and/or the computing power instance expected by the terminal device, dynamic adjustment on the computing power instance executed by the terminal device (and/or the computing power resource corresponding to the computing power instance executed by the terminal device), so that the provided configuration information can meet a requirement of the terminal device.

S402: The terminal device obtains first information.

In this embodiment, the terminal device obtains the first information in step S402, where the first information indicates a first computing power instance, and the first computing power instance is a computing power instance in the at least one computing power instance configured by using the first configuration information in step S401.

In a possible implementation, in step S402, the first information includes an identifier of the first computing power instance and/or an identifier of computing power resource information corresponding to the first computing power instance. That the terminal device obtains first information in step S402 includes: The terminal device receives the first information, where the first information is carried in layer 1 (layer 1, L1) control information, layer 2 (layer 2, L2) control information, or a layer 3 (layer 3, L3) message.

Specifically, the terminal device may receive, from the network device, the first information for indicating the first computing power instance, so that the terminal device executes the first computing power instance based on the indication of the network device. Therefore, when the computing power of the terminal device is configured, the terminal device serves as the computing node to participate in the computing process corresponding to the computing power instance, and the network device may further perform, based on the first message, dynamic adjustment on the computing power instance executed by the terminal device.

In addition, before the terminal device receives the first information, the method further includes: The terminal device receives a reference signal (reference signal, RS); and the terminal device sends a measurement result corresponding to the RS. Specifically, before receiving the first information, the terminal device may receive the RS and send the measurement result corresponding to the RS, so that the network device may use the measurement result of the RS as a basis for the network device to send the first information. The measurement result of the RS may reflect information about a channel between the terminal device and the network device. Therefore, the network device may perform, based on the measurement result of the RS, dynamic adjustment on the computing power instance executed by the terminal device (and/or the computing power resource corresponding to the computing power instance executed by the terminal device).

In some implementations, the first computing power instance may be a computing power instance on which the network device and one or more terminal devices perform collaborative computing, so that after step S402, the terminal device can share a computing resource on the network device side when executing the first computing power instance based on the first information as the indication of the network device, to resolve a problem of insufficient computing resources of the terminal device. Correspondingly, the network device also needs to perform a partial computing process of the first computing power instance based on the first information. In other words, the network device also needs to locally adjust the first computing power instance corresponding to the first information, so that the network device and the terminal device can implement dynamic synchronous adjustment in the collaborative computing process.

In some implementations, the first computing power instance may be a computing power instance on which the terminal device and another computing node perform collaborative computing, so that after step S402, the terminal device can share a computing resource on the terminal device side when executing the first computing power instance based on the first information. In this way, the computing resource of the terminal device is shared, and a computing resource reuse degree is improved. Correspondingly, the network device may not participate in execution of the first computing power instance. Therefore, the network device may not perform a partial computing process of the first computing power instance based on the first information. In other words, the network device does not need to locally adjust the first computing power instance corresponding to the first information.

Optionally, the another computing node may include another terminal device and/or another network device.

In a possible implementation, the first computing power instance is a default computing power instance; and/or the computing power resource information corresponding to the first computing power instance is default computing power resource information.

Optionally, the default computing power instance may also be referred to as a basic computing power instance, a preconfigured computing power instance, or the like. Correspondingly, the default computing power resource information may also be referred to as basic computing power resource information, preconfigured basic computing power resource information, or the like.

Optionally, both the network device and the terminal device have (or prestore) the default computing power instance.

Optionally, the default computing power instance may be a computing power instance with low power consumption/low overhead/low computing capability requirement.

Specifically, the first computing power instance indicated by the first information may be the default computing power instance, and/or the computing power resource information corresponding to the first computing power instance indicated by the first information is the default computing power resource information. Therefore, based on implementation of the default computing power instance, it can be ensured that if signaling (such as reconfiguration signaling and scheduling signaling) transmitted between the network device and the terminal device fails to be transmitted, the terminal device can also execute the default computing power instance. In this way, the terminal device can still serve as the computing node to participate in the computing process corresponding to the computing power instance, to improve a computing resource reuse degree.

In addition, if the first computing power instance is the default computing power instance, and/or the computing power resource information corresponding to the first computing power instance is the default computing power resource information, that the terminal device obtains first information in step S402 includes: The terminal device generates the first information in step S402 when at least one of the following is met:
a first timer expires, where configuration information of the first timer is included in the first message;
a battery level of the terminal device is less than a first threshold, where the first threshold may be a fixed value specified in a protocol, for example, 5% or 10%, may be a value agreed upon by the network device and the terminal device, for example, a value determined based on a currently executed computing power instance, or may be a specific value that is temporarily determined;
the terminal device enters a radio resource control idle RRC idle state;
signal quality that is of the RS and that is obtained by the terminal device through measurement is less than a threshold;
the terminal device performs cell handover;
the terminal device performs RRM measurement;
an executed computing amount corresponding to a computing power instance currently executed by the terminal device is greater than a threshold; or
the terminal device determines that a quality of service (quality of service, QoS) requirement is less than a threshold.

Optionally, the signal quality may include at least one of the following: reference signal received power (reference signal received power, RSRP), reference signal received quality (reference signal received quality, RSRQ), or a signal to interference plus noise ratio (signal to interference plus noise ratio, SINR).

Specifically, in step S402, the terminal device may trigger generation of the first information based on occurrence of the at least one event. In other words, without the indication of the network device, the terminal device may perform, based on the at least one event, dynamic switching of the computing power instance executed by the terminal device. Therefore, if signaling (such as reconfiguration signaling and scheduling signaling) transmitted between the network device and the terminal device fails to be transmitted, it is ensured that the terminal device can also execute the default computing power instance. In this way, the terminal device can still serve as the computing node to participate in the computing process corresponding to the computing power instance, to improve a computing resource reuse degree.

S403: The terminal device executes the first computing power instance based on the first information.

In this embodiment, after the terminal device obtains the first information in step S402, the terminal device executes the first computing power instance based on the first information in step S403.

In a possible implementation, in step S403, in a process in which the terminal device executes the first computing power instance based on the first information, the terminal device may further send third indication information, where the third indication information indicates computing power adjustment information of the terminal device. Then, the network device may send third configuration information to the terminal device by using the third indication information for indicating the computing power adjustment information of the terminal device. Correspondingly, the terminal device may further receive the third configuration information from the network device. The third configuration information is used to update the first configuration information, and/or the third configuration information is used to update the second configuration information.

Specifically, in the process in which the terminal device executes the first computing power instance based on the first information in step S403, the terminal device may send, to the network device, the third indication information for indicating the computing power adjustment information of the terminal device, so that the network device may use the computing power adjustment information of the terminal device as a basis for the network device to send the updated configuration (namely, the third configuration information for updating the first configuration information, and/or the second configuration information). Therefore, the network device may perform, based on the computing power adjustment information of the terminal device, dynamic adjustment on the computing power instance executed by the terminal device (and/or the computing power resource corresponding to the computing power instance executed by the terminal device), so that the provided configuration information can meet a computing power adjustment requirement of the terminal device.

Optionally, the third indication information includes:
memory information, battery level information, and computing power utilization information.

For example, that the third indication information includes the battery level information is used as an example. If the computing power resource information corresponding to the first computing power instance executed by the terminal device in step S403 includes the battery level information, for example, the battery level information included in the computing power resource information indicates that the first computing power instance can be executed only when the battery level is greater than a threshold (for example, a value of the threshold may be 50%, 40%, 30%, 20%, or the like, or another value, and for ease of description, an example in which the value of the threshold is 20% is used herein). In this case, in the process in which the terminal device performs the first computing power instance in step S403, when the terminal device determines that the battery level of the terminal device is less than or equal to 20%, the terminal device may send the third indication information to the network device, to indicate that the battery level information of the terminal device is less than or equal to 20%. That is, the threshold herein may also be the first threshold mentioned in the foregoing embodiment.

In some implementations, after the network device receives the third indication information, the network device may deliver the third configuration information based on the third indication information, where the third configuration information is used to update the first configuration information, and/or the third configuration information is used to update the second configuration information. After receiving the third configuration information, the terminal device updates the first configuration information and/or the second configuration information to obtain an updated computing power instance configuration and/or an updated computing power resource configuration, and executes another computing power instance or suspends execution of the computing power instance based on the updated computing power instance configuration and/or the updated computing power resource configuration.

In some other implementations, in the process in which the terminal device performs the first computing power instance in step S403, when the terminal device determines that the battery level of the terminal device is less than or equal to 20%, the terminal device may alternatively execute a default computing power instance or execute a computing power instance corresponding to a default computing power resource. For an implementation process of the default computing power instance and the default computing power resource, refer to the description in the foregoing embodiment, and corresponding technical effect is achieved. Details are not described herein again.

Based on the technical solution shown in FIG. 4, the terminal device receives, from the network device, the first message including the first configuration information in step S401, where the first configuration information includes the configuration information of the at least one computing power instance. After the terminal device obtains the first information for indicating the first computing power instance in the at least one computing power instance in step S402, the terminal device executes the first computing power instance based on the first information in step S403. In other words, after the terminal device configures the computing power instance based on the indication of the network device, the terminal device executes the corresponding computing power instance based on the first information. Therefore, the wireless network system in which the terminal device and the network device are located may become dual infrastructure for communication, connection, and computing. In the manner in which the network device configures the computing power of the terminal device based on the first configuration information, the terminal device serves as the computing node to participate in the computing process corresponding to the computing power instance. This can effectively improve a computing resource reuse degree, to increase network revenue.

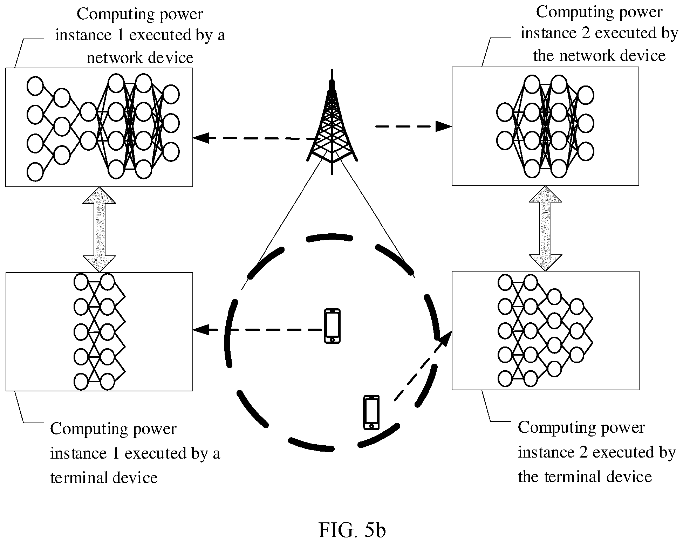

For example, the following provides description by using an example in which the computing process related to the computing power instance is a computing process of a neural network. An implementation scenario shown in FIG. 5a and FIG. 5b is used as an example. For example, a coverage area of a cell signal provided by the network device is a circle. It should be understood that the coverage area of the cell signal may alternatively be an ellipse, a rectangle, a hexagon, or another regular or irregular shape. This is not limited herein.

In a possible implementation, the network device and the terminal device may perform a computing power instance, to implement a joint computing process. For example, a computing task of the neural network shown in FIG. 5a is used as a computing power instance. The computing task of the neural network includes a computing process of an eight-layer neural network. The network device and the terminal device may separately perform a partial computing process of the eight-layer neural network, to implement a joint computing process.

The left side of FIG. 5b is an example of a scenario in which the terminal device is located in a cell center. A channel capacity of the terminal device located in the cell center is large, and the terminal device may compute fewer layers of the neural network (in the figure, a quantity of neural network layers indicates complexity of the computing power instance), and send an output result and leave computing of remaining layers to the network device. In the figure, "a computing power instance 1 executed by the terminal device" corresponds to first two neural network layers of the computing task shown in FIG. 5a, and "a computing power instance 1 executed by the network device" corresponds to last six neural network layers of the computing task shown in FIG. 5a. The right side of FIG. 5b is an example of a scenario in which the terminal device is located at a cell edge. Compared with the scenario in which the terminal device is located in the cell center, a channel capacity of the terminal device located at the cell edge is small, and the terminal device may compute more layers, and send an output result and leave computing of remaining layers to the base station. In the figure, "a computing power instance 2 executed by the terminal device" corresponds to first four neural network layers of the computing task shown in FIG. 5a, and "a computing power instance 2 executed by the network device" corresponds to last four neural network layers of the computing task shown in FIG. 5a, to complete joint computing. Therefore, based on the implementation shown in FIG. 4, after the terminal device configures the computing power instance based on the indication of the network device in step S401, the terminal device obtains the first information in step S402, and executes the corresponding computing power instance based on the first information in step S403. In this way, in a process in which the terminal device switches from the scenario shown on the left side of FIG. 5b to the scenario shown on the right side of FIG. 5b (or a process in which the terminal device switches from the scenario shown on the right side of FIG. 5b to the scenario shown on the left side of FIG. 5b), the terminal device can switch the computing power instance based on the first information. Therefore, the wireless network system in which the terminal device and the network device are located may become dual infrastructure for communication, connection, and computing. In the manner in which the network device configures the computing power of the terminal device based on the first configuration information, the terminal device serves as the computing node to participate in the computing process corresponding to the computing power instance. This can effectively improve a computing resource reuse degree, to increase network revenue.

In a possible implementation, the first information is indicated by the network device in step S402. Therefore, when the computing power of the terminal device is configured, the terminal device serves as the computing node to participate in the computing process corresponding to the computing power instance, and the network device may further perform, based on the first message, dynamic adjustment on the computing power instance executed by the terminal device.

In another possible implementation, the first computing power instance indicated by the first information is the default computing power instance, that is, the terminal device generates the first information in step S402 based on triggering of some predefined events. Therefore, based on implementation of the default computing power instance, it can be ensured that if signaling (such as reconfiguration signaling and scheduling signaling) transmitted between the network device and the terminal device fails to be transmitted, the terminal device can also execute the default computing power instance. In this way, the terminal device can still serve as the computing node to participate in the computing process corresponding to the computing power instance, to improve a computing resource reuse degree.

The following further describes the communication method shown in FIG. 4 with reference to more embodiments.

In an implementation of the communication method shown in FIG. 4, a computing power resource is adjusted based on a computing power instance ID. The first message sent by the network device in step S401 includes the first configuration information and the second configuration information.

Optionally, the computing power instance ID (which may be a task ID or another form, may be CMF/TA assignment, or may be TS/CS assignment) included in the first configuration information for configuring the at least one computing power instance is in a one-to-one correspondence with a configuration related to a computing amount, for example, computing power, a model, a split learning location, an inference segmentation point location, local epochs of federated learning, and the like. Optionally, the computing power instance ID may alternatively be a model ID, a segmentation point ID of split learning or inference, an ID of the epochs of federated learning, or the like. This is not limited herein.

Optionally, the second configuration information for configuring the at least one computing power resource information includes one or more execution entity IDs. One execution entity (execution entity ID) may include a plurality of computing power instances (that is, one execution entity can be used to execute a plurality of computing power instances). The configuration information of the execution entity includes an execution entity ID and computing power configuration information of the execution entity, and specifically includes a plurality of computing power resources (CPU type, storage, memory, and battery level information) or a computing power container (a combination of the above computing power types). Further, optionally, a computing power resource quantity of the execution entity is greater than or equal to a maximum quantity of computing power resources required by the plurality of computing power instances included in the execution entity.

It should be understood that a computing power resource (or referred to as an execution entity) in this application may indicate a running environment of a computing power instance, for example, storage, power, memory, computing power, or the like that is required when the computing power instance runs.

It should be understood that the computing power instance in this application may indicate a computing resource usage mode or method related to a computing amount, for example, computing power, a model, a split learning location, an inference segmentation point location, local epochs of federated learning, and the like.

In this implementation, the network device may further send the first information to the terminal device in step S402, to implement dynamic adjustment on the computing power instance. Optionally, the first information sent by the network device in step S402 may be adjustment signaling, namely, computing power instance ID indication information, and indicates the terminal device to execute the first computing power instance.

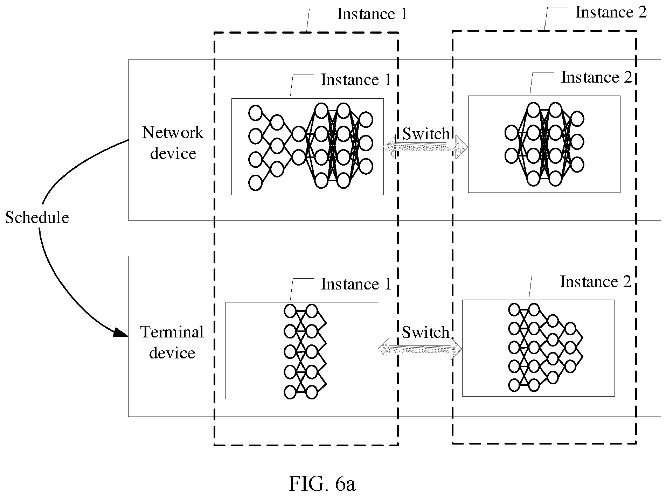

For example, this implementation may be implemented by using a scenario shown in FIG. 6a. For ease of description, a "computing power instance" is denoted as an "instance" in FIG. 6a, including an instance 1 and an instance 2.

Optionally, in the scenario shown in FIG. 6a, a process in which the network device sends the first message to the terminal device in step S401 and the network device sends the first information to the terminal device in step S402 may be triggered based on scheduling of the CMF. The CMF may be deployed on a core network side, or may be deployed on an access network side. This is not limited in this application.

Optionally, in the scenario shown in FIG. 6a, the network device may trigger, based on real-time convergence scheduling (convergence scheduling, CS) generated by the network device, to send the first information to the terminal device in step S402.

As shown in FIG. 6a, an example in which the network device and the terminal device jointly perform the computing task of the neural network shown in FIG. 5a is still used herein. In the instance 1, the network device performs the computing process of the last six layers, and the terminal device performs the computing process of the first two layers. In other words, in the instance 1, the terminal device may perform less computing, so that the terminal device may exchange more neural network hidden layer feature information. In the instance 2, the network device performs the computing process of the last four layers, and the terminal device performs the computing process of the first four layers. In other words, the instance 2 is different from the instance 1 in that the terminal device may perform more computing, so that the terminal device may exchange less neural network hidden layer feature information.

In an implementation process of the scenario shown in FIG. 6a, when the terminal device is in the cell center, the network device may determine, based on the channel information reported by the terminal device, that the channel between the terminal device and the network device has good quality and a large transmission bandwidth, and the network device may execute the instance 1 in the figure. In the instance 1, more feature information needs to be exchanged, and both the terminal device and the network device jointly complete split inference based on configurations corresponding to the instance 1. In this case, the network device may send the first information to the terminal device in step S402, to schedule the terminal device to execute the instance 1, so that the terminal device executes the instance 1 in step S403.

In the implementation process of the scenario shown in FIG. 6a, when the terminal device is at the cell edge, the network device may determine, based on the channel information reported by the terminal device, that the channel between the terminal device and the network device has poor quality and a small transmission bandwidth, and the network device may execute the instance 2 in the figure. In the instance 2, less feature information needs to be exchanged, and both the terminal device and the network device jointly complete split inference based on configurations corresponding to the instance 1. In this case, the network device may send the first information to the terminal device in step S402, to schedule the terminal device to execute the instance 2, so that the terminal device executes the instance 2 in step S403.

In another implementation of the communication method shown in FIG. 4, a computing power resource is adjusted based on a computing power execution entity ID. The first message sent by the network device in step S401 includes the first configuration information and the second configuration information.

Optionally, the computing power instance ID (which may be a task ID or another form, may be CMF/TA assignment, or may be TS/CS assignment) included in the first configuration information for configuring the at least one computing power instance is in a one-to-one correspondence with a configuration related to a computing amount, for example, computing power, a model, a segmentation point location, and the like.

Optionally, the second configuration information for configuring the at least one computing power resource information includes one or more execution entity IDs. The execution entity and the computing power instance ID may be mapped one by one. The configuration information of the execution entity includes an execution entity ID and computing power configuration information of the execution entity, and specifically includes a computing power resource (CPU type, storage, memory, and battery level information) or a computing power container (a combination of the above computing power types). Further, optionally, a computing power resource quantity of the execution entity is greater than or equal to a maximum quantity of computing power resources required by the plurality of computing power instances included in the execution entity.

Further, optionally, the computing power execution entity ID may alternatively be a model ID, a segmentation point ID of split learning or inference, an ID of the epochs of federated learning, or the like. This is not limited herein.

In this implementation, the network device may further send the first information to the terminal device in step S402, to implement dynamic adjustment on the computing power instance. Optionally, the first information sent by the network device in step S402 may be adjustment signaling, namely, computing power instance ID indication information, and indicates the terminal device to execute the computing power resource corresponding to the first computing power instance.

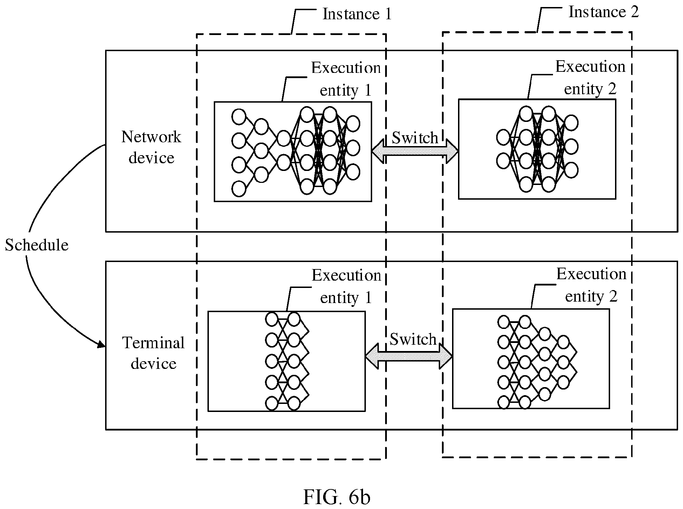

For example, this implementation may be implemented by using a scenario shown in FIG. 6b. For ease of description, "a computing power resource corresponding to a computing power instance" in FIG. 6b is denoted as an "execution entity", including an execution entity 1 and an execution entity 2.

Optionally, in the scenario shown in FIG. 6b, a process in which the network device sends the first message to the terminal device in step S401 and the network device sends the first information to the terminal device in step S402 may be triggered based on scheduling of the CMF. The CMF may be deployed on a core network side, or may be deployed on an access network side. This is not limited in this application.

Optionally, in the scenario shown in FIG. 6b, the network device may trigger, based on real-time convergence scheduling (convergence scheduling, CS) generated by the network device, to send the first information to the terminal device in step S402.

As shown in FIG. 6b, an example in which the network device and the terminal device jointly perform the computing task of the neural network shown in FIG. 5a is still used herein. In a computing power instance corresponding to the execution entity 1, the network device performs the computing process of the last six layers, and the terminal device performs the computing process of the first two layers. In other words, in the computing power instance corresponding to the execution entity 1, the terminal device may perform less computing, so that the terminal device may exchange more neural network hidden layer feature information. In a computing power instance corresponding to the execution entity 2, the network device performs the computing process of the last four layers, and the terminal device performs the computing process of the first four layers. In other words, the computing power instance corresponding to the execution entity 2 is different from the computing power instance corresponding to the execution entity 1 in that the terminal device may perform more computing, so that the terminal device may exchange less neural network hidden layer feature information.

In an implementation process of the scenario shown in FIG. 6b, when the terminal device is in the cell center, the network device may determine, based on the channel information reported by the terminal device, that the channel between the terminal device and the network device has good quality and a large transmission bandwidth, and the network device may execute the computing power instance corresponding to the execution entity 1 in the figure. In the computing power instance corresponding to the execution entity 1, more feature information needs to be exchanged, and both the terminal device and the network device jointly complete split inference based on configurations corresponding to the computing power instance corresponding to the execution entity 1. In this case, the network device may send the first information to the terminal device in step S402, to indicate the terminal device to execute the computing power instance corresponding to the execution entity 1, so that the terminal device executes the computing power instance corresponding to the execution entity 1 in step S403.

In the implementation process of the scenario shown in FIG. 6b, when the terminal device is at the cell edge, the network device may determine, based on the channel information reported by the terminal device, that the channel between the terminal device and the network device has poor quality and a small transmission bandwidth, and the network device may execute the computing power instance corresponding to the execution entity 2 in the figure. In the computing power instance corresponding to the execution entity 2, less feature information needs to be exchanged, and both the terminal device and the network device jointly complete split inference based on configurations corresponding to the instance 1. In this case, the network device may send the first information to the terminal device in step S402, to indicate the terminal device to execute the computing power instance corresponding to the execution entity 2, so that the terminal device executes the computing power instance corresponding to the execution entity 2 in step S403.

Therefore, in the implementation shown in FIG. 6a and FIG. 6b, a resource required by an execution entity is configured based on a maximum quantity of resources required by a plurality of computing power instances, so that the computing power instances can be quickly switched. Quick switching of the computing power instances matches quick changes of the channel between the terminal device and the network device. This supports real-time dynamic convergence adjustment of computing power and connection.

In addition, in the implementation shown in FIG. 6a and FIG. 6b, the network device generates the computing power execution entity or the computing power instance configuration information. A computing power execution entity or a computing power instance is mapped one by one to a configuration related to a computing amount, for example, computing power, a model, a segmentation point location, local epochs of federated learning, and the like, and is transmitted to the terminal. The network device sends dynamic adjustment indication information of a computing power execution entity or a computing power instance to the terminal device, where the indication information includes computing power execution entity ID information or computing power instance ID information (due to the one-to-one mapping, the indication information may alternatively be model ID information, segmentation point ID information, local epoch ID information, or the like). Therefore, convergence dynamic adjustment of computing power and connection is implemented.

In another implementation of the communication method shown in FIG. 4, dynamic switching of a computing power instance is performed based on a predefined event. The first message sent by the network device in step S401 includes the first configuration information and the second configuration information.

Optionally, the computing power instance ID (which may be a task ID or another form, may be CMF/TA assignment, or may be TS/CS assignment) included in the first configuration information for configuring the at least one computing power instance is in a one-to-one correspondence with a configuration related to a computing amount, for example, computing power, a model, a split learning location, an inference segmentation point location, local epochs of federated learning, computing power duration, and the like.

Optionally, the second configuration information for configuring the at least one computing power resource information includes one or more execution entity IDs. One execution entity (execution entity ID) may include one or more computing power instances. The configuration information of the execution entity includes an execution entity ID and computing power configuration information of the execution entity, and specifically includes one or more computing power resources (CPU type, storage, memory, battery level information, and computing duration) or a computing power container (a combination of the above computing power types). Further, optionally, a computing power resource quantity of the execution entity is greater than or equal to a maximum quantity of computing power resources required by the plurality of computing power instances included in the execution entity.

In addition, one of the plurality of computing power instances in the execution entity is used as a default (default) computing power instance, or one of the plurality of computing power execution bodies is used as a default computing power execution entity. When a predefined event occurs, the terminal base station switches to the default computing power instance or the default computing power execution entity.

Further, optionally, the computing power execution entity ID may alternatively be a model ID, a segmentation point ID of split learning or inference, an ID of the epochs of federated learning, or the like. This is not limited herein.

In this implementation, the terminal device may generate the first information in step S402, to indicate the terminal device to execute the first computing power instance. That is, the terminal device dynamically switches the computing power instance based on the predefined event (if an execution entity is mapped one by one to a computing power instance, the computing power execution entity may alternatively be switched).

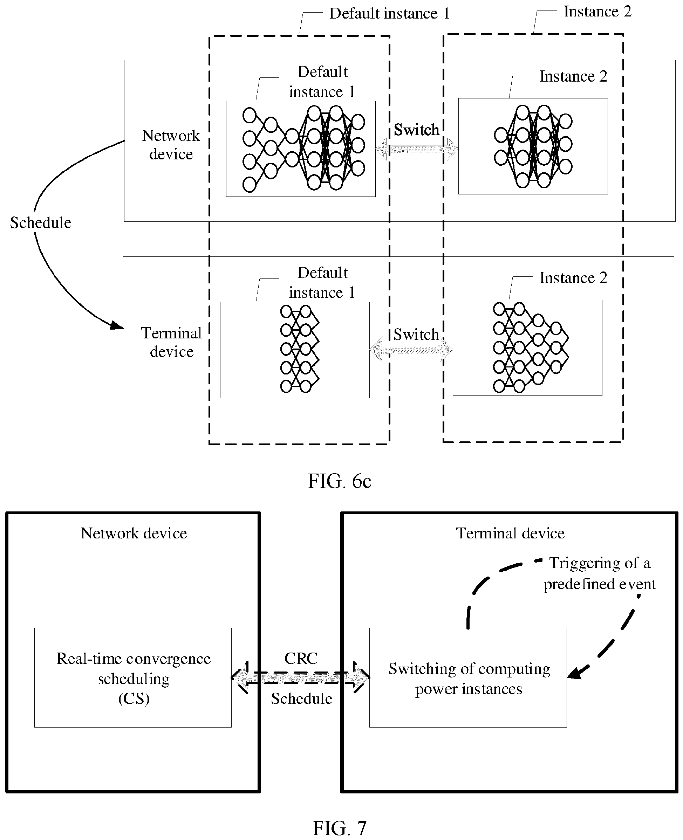

For example, this implementation may be implemented by using a scenario shown in FIG. 6c. For ease of description, a "computing power instance" is denoted as an "instance" in FIG. 6c, including a default instance 1 and a default instance 2.

Optionally, in the scenario shown in FIG. 6c, a process in which the network device sends the first message to the terminal device in step S401 and the network device determines the terminal device to execute a default instance in step S402 may be triggered based on scheduling of the CMF. The CMF may be deployed on a core network side, or may be deployed on an access network side. This is not limited in this application.

Optionally, in the scenario shown in FIG. 6c, the network device may determine, based on real-time convergence scheduling (convergence scheduling, CS) generated by the network device, the terminal device to execute the default instance in step S402.

As shown in FIG. 6c, an example in which the network device and the terminal device jointly perform the computing task of the neural network shown in FIG. 5a is still used herein. In the default instance 1, the terminal device performs the computing process of the first two layers, and the network device performs the computing process of the last six layers. In other words, in the instance 1, the terminal device may perform less computing, so that the terminal device may exchange more neural network hidden layer feature information. In the instance 2, the network device performs the computing process of the first four layers, and the terminal device performs the computing process of the last four layers. In other words, the instance 2 is different from the default instance 1 in that the terminal device may perform more computing, so that the terminal device may exchange less neural network hidden layer feature information.

In an implementation process of the scenario shown in FIG. 6c, when the terminal device is in the cell center, the network device may determine, based on the channel information reported by the terminal device, that the channel between the terminal device and the network device has good quality and a large transmission bandwidth, and the network device may execute the instance 1 in the figure. In the instance 1, more feature information needs to be exchanged, and both the terminal device and the network device jointly complete split inference based on configurations corresponding to the instance 1. In this case, the network device may send the first information to the terminal device in step S402, to indicate the terminal device to execute the instance 1, so that the terminal device executes the instance 1 in step S403.

In an implementation process of the scenario shown in FIG. 6c, in a process of executing the instance 2, the terminal device dynamically switches a computing power instance based on a predefined event (if an execution entity is mapped one by one to a computing power instance, the computing power execution entity may alternatively be switched). That is, the terminal device triggers generation of the first information based on the predefined event in step S402, and executes the first computing power instance based on the first information in step S403.

Optionally, the predefined event includes at least one of the following:

The network device preconfigures a timer, and switches to the default instance after working on a non-default instance for a period of time. For example, both the terminal device and the network device work on the instance 2. After the timer expires, both the terminal device and the network device switch to the corresponding default instance 1 to work.

When the terminal device determines that the battery level of the terminal device is less than a threshold configured on a network side or another computing power resource event, the terminal device switches to the default instance. For example, the terminal device or the network device switches to the default instance 1 to work, to ensure proper computing.

If RSRP of the terminal device is less than a threshold, or the terminal device enters an RRC idle state, or a cell handover or another RRM event occurs, the terminal device switches to the default instance. For example, the terminal device or the network device switches to the default instance 1 to work.

Further, optionally, the predefined event may further include other more extensive events, for example, 90% completion of the computing task, a decrease in a QoS requirement of a user computing service, and the like.

Therefore, in the implementation shown in FIG. 6c, the network device generates the computing power execution entity or the computing power instance configuration information. A computing power execution entity or a computing power instance is mapped one by one to a configuration related to a computing amount, for example, computing power, a model, a segmentation point location, local epochs of federated learning, and the like, and is transmitted to the terminal. The network device sends dynamic adjustment indication information of a computing power execution entity or a computing power instance to the terminal device, where the indication information includes computing power execution entity ID information or computing power instance ID information (due to the one-to-one mapping, the indication information may alternatively be model ID information, segmentation point ID information, local epoch ID information, or the like). Therefore, convergence dynamic adjustment of computing power and connection is implemented.

In addition, based on implementation of the default computing power instance, indication information of dynamic signaling can be further reduced. In addition, it can be ensured that if signaling (such as reconfiguration signaling and scheduling signaling) transmitted between the network device and the terminal device fails to be transmitted, it is ensured that the terminal device can also execute the default computing power instance. In this way, the terminal device can still serve as the computing node to participate in the computing process corresponding to the computing power instance, to improve a computing resource reuse degree.

In conclusion, it can be learned from any implementation shown in FIG. 4 to FIG. 6c that, as shown in FIG. 7, the terminal device may obtain the first information in step S402 based on real-time convergence scheduling (CS) of the network device or based on triggering of the predefined event. Then, the terminal device executes the first computing power instance based on the first information in step S403, so that the terminal device serves as the computing node to participate in the computing process corresponding to the computing power instance. This can effectively improve a computing resource reuse degree, to increase network revenue.

In some implementations, the first computing power instance may be a computing power instance on which the network device and one or more terminal devices perform collaborative computing, so that the terminal device can share a computing resource on the network device side when executing the computing power instance based on the first configuration information, to resolve a problem of insufficient computing resources of the terminal device.

In some implementations, the first computing power instance may be a computing power instance on which the terminal device and another computing node perform collaborative computing, so that the terminal device can share a computing resource on the terminal device side when executing the computing power instance based on the first configuration information. In this way, the computing resource of the terminal device is shared, and a computing resource reuse degree is improved.

Optionally, the another computing node may include another terminal device and/or another network device.

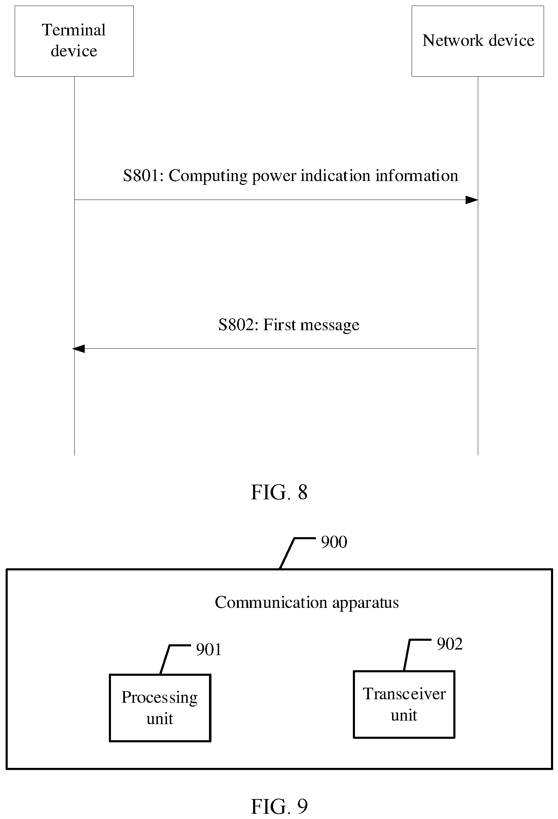

FIG. 8 is another schematic diagram of a communication method according to this application. The method includes the following steps.

S801: A terminal device sends computing power indication information.

In this embodiment, the terminal device sends the computing power indication information in step S801. Correspondingly, a network device receives the computing power indication information in step S401.

In a possible implementation, before the terminal device sends the computing power indication information to the network device in step S801, the method further includes: The terminal device receives a second message from the network device, where the second message includes initial configuration information, and the initial configuration information is used to configure at least one computing power instance.

Specifically, before the terminal device sends the computing power indication information to the network device in step S801, the terminal device may further receive the second message including the initial configuration information, where the initial configuration information is used to configure the at least one computing power instance. Then, when the terminal device determines that the initial configuration information needs to be updated (for example, a value of CPU type information, storage information, memory information, battery level information, and/or computing power utilization information of the terminal device is less than or greater than a threshold), the terminal device may send the computing power indication information to the network device, so that the network device delivers updated configuration information, namely, first configuration information. Then, the terminal device may update the initial configuration information based on the first configuration information, to obtain computing power configuration information that is suitable for the terminal device.

S802: The network device sends a first message.

In this embodiment, after the network device receives the computing power indication information in step S801, the network device sends the first message in step S802. Correspondingly, the terminal device receives the first message in step S802.

In a possible implementation, after step S802, the method further includes: The terminal device sends a response message or an acknowledgment message of the first message. Specifically, after the terminal device receives the first message, the terminal device may further send the response message or the acknowledgment message of the first message, so that the network device determines, based on the response message or the acknowledgment message of the first message, that the terminal device has received the first message, and configures at least one computing power instance by using the first configuration information included in the first message.

In a possible implementation, the computing power indication information sent by the terminal device in step S801 indicates computing power information of the terminal device, and there may be multiple implementations of the computing power indication information. Several examples are provided below for illustration.

Example 1: The computing power indication information sent by the terminal device in step S801 includes first indication information, and the first indication information indicates a computing power status of the terminal device. Specifically, the computing power indication information sent by the terminal device includes the first indication information for indicating the computing power status of the terminal device. In other words, before the terminal device receives the first message, the terminal device may send, to the network device, the first indication information for indicating the computing power status of the terminal device, so that the network device may use the computing power status of the terminal device as a basis for the network device to send the first message. Therefore, the network device may perform, based on the computing power status of the terminal device, dynamic adjustment on a computing power instance executed by the terminal device (and/or a computing power resource corresponding to the computing power instance executed by the terminal device).

Optionally, the first indication information includes at least one of the following:
CPU type information, storage information, memory information, battery level information, and computing power utilization information.

Example 2: The computing power indication information sent by the terminal device in step S801 includes second indication information, and the second indication information indicates computing power resource information and/or a computing power instance expected by the terminal device. Specifically, the computing power indication information sent by the terminal device includes the second indication information for indicating the computing power resource information and/or the computing power instance expected by the terminal device. In other words, before the terminal device receives the first message, the terminal device may send, to the network device, the second indication information for indicating the computing power resource information and/or the computing power instance expected by the terminal device, so that the network device may use the computing power resource information and/or the computing power instance expected by the terminal device as a basis for the network device to send the first message. Therefore, the network device may perform, based on the computing power resource information and/or the computing power instance expected by the terminal device, dynamic adjustment on the computing power instance executed by the terminal device (and/or the computing power resource corresponding to the computing power instance executed by the terminal device), so that the provided configuration information can meet a requirement of the terminal device.

Example 3: The computing power indication information sent by the terminal device in step S801 includes third indication information, and the third indication information indicates computing power adjustment information of the terminal device. Specifically, the computing power indication information sent by the terminal device includes the third indication information for indicating the computing power adjustment information of the terminal device. In other words, before the terminal device receives the first message, the terminal device may send, to the network device, the second indication information for indicating the computing power adjustment information of the terminal device, so that the network device may use the computing power adjustment information of the terminal device as a basis for the network device to send the first message. Therefore, the network device may perform, based on the computing power adjustment information of the terminal device, dynamic adjustment on the computing power instance executed by the terminal device (and/or the computing power resource corresponding to the computing power instance executed by the terminal device), so that the provided configuration information can meet a computing power adjustment requirement of the terminal device.

Optionally, the third indication information includes:
memory information, battery level information, and computing power utilization information.

In a possible implementation, the first message sent by the network device in step S802 further includes second configuration information, where the second configuration information is used to configure information of at least one computing power resource, and the information of the at least one computing power resource is associated with the at least one computing power instance.

Optionally, that the at least one computing power resource is associated with the at least one computing power instance includes:
each of the at least one computing power resource is in a one-to-one correspondence with each of the at least one computing power instance; or
one of the at least one computing power resource corresponds to one or more computing power instances in the at least one computing power instance.

Specifically, the at least one computing power resource configured by using the second configuration information is associated with the at least one computing power instance configured by using the first configuration information. A computing power resource in the at least one computing power resource may be in a one-to-one correspondence or may be in a one-to-one or one-to-many correspondence with a computing power instance in the at least one computing power instance, to improve flexibility of a process in which the network device configures a computing power instance and a computing power resource. In addition, if the network device indicates the first computing power instance based on the first information, flexibility of the process in which the network device indicates the first computing power instance and/or the computing power resource corresponding to the first computing power instance may also be improved.

In addition, if one computing power resource in the at least one computing power resource corresponds to a plurality of computing power instances in the at least one computing power instance, that is, if the computing power resource in the at least one computing power resource is in the one-to-many correspondence with the computing power instance in the at least one computing power instance, because the terminal device may execute a plurality of different computing power instances on the computing power resource, the terminal device does not need to determine (or reconfigure, prepare, activate, or the like) a new computing power resource when performing a switching process of the computing power instance, so that the terminal device can quickly switch between a plurality of different computing power instances corresponding to the computing power resource.

In a possible implementation, the information of the at least one computing power resource includes at least one of the following:
CPU type information, storage information, execution duration information, memory information, or battery level information.

In a possible implementation, the computing power instance in the at least one computing power instance includes at least one of the following:
execution duration information, computing power information, model information, a split learning location, an inference segmentation point location, or local epochs of federated learning.

Based on the foregoing technical solution, after the terminal device sends the computing power indication information in step S801, the network device generates, based on the computing power indication information, and sends the first message including the first configuration information, where the first configuration information is used to configure the at least one computing power instance, so that the terminal device receives the first configuration information in step S802. In other words, after the terminal device sends related information for indicating computing power of the terminal device, the network device configures, based on the information, the computing power instance executed by the terminal device. Therefore, the wireless network system in which the terminal device and the network device are located may become dual infrastructure for communication, connection, and computing. In a manner in which the network device configures the computing power of the terminal device based on the first configuration information, the terminal device serves as a computing node to participate in a computing process corresponding to a computing power instance. This can effectively improve a computing resource reuse degree, to increase network revenue.

In another implementation of the communication method shown in FIG. 8, the network device may reconfigure the computing power instance and/or the computing power resource corresponding to the computing power instance based on signaling in step S802.

For example, the terminal device may sense the computing power status of the terminal device, and report the computing power indication information to the network device in step S801. The computing power indication information may include computing power status information, a computing power adjustment request, or computing power recommendation information.

Optionally, the computing power status information includes one or more of the following: computing power status information or utilization information (CPU type, storage, memory, and battery level information) or state information or utilization information of a computing power container (a combination of the above computing power types).

Optionally, the computing power status information may be transmitted in a manner in which the computing power information is carried in L1 signaling, L2 MAC CE signaling, an L3 RRC CRC container, or a CRC IE or an RRC computing power request message defined in RRC signaling.

Optionally, the computing power recommendation information includes ID information of one computing power execution entity or ID information of one computing power instance in a plurality of computing power execution bodies or a plurality of computing power instances configured on the network side, or includes configuration information of a computing power execution entity or configuration information of a computing power instance recommended by the terminal device.

Optionally, the computing power instance ID or the computing power execution entity ID may alternatively be a model ID, a segmentation point ID of split learning or inference, an ID of the epochs of federated learning, or the like. This is not limited herein.

In addition, after the network device receives the computing power indication information in step S801, a computing power management function in the network device performs computing power adjustment, and may directly/indirectly reconfigure/schedule computing power. Step S802 is performed to trigger RRC signaling reconfiguration to calculate a guaranteed rate of a logical channel to which a radio bearer is mapped, and the like.

Optionally, a basis for the network device to perform computing power adjustment may include: CSI/RSRP information reported by the terminal device, base station computing power load information, computing power status report information of the terminal, computing power indication information sent by the terminal device in step S801, and the like.

Optionally, the RRC computing power reconfiguration message includes: One execution entity (execution entity ID) may include one or more computing power instances, and the configuration information of the execution entity includes an execution entity ID and computing power configuration information of the execution entity, and specifically includes a plurality of computing power resources (CPU type, storage, memory, and battery level information) or a computing power container (a combination of the above computing power types). A computing power resource quantity of the execution entity is greater than or equal to a maximum quantity of computing power resources required by the plurality of computing power instances included in the execution entity.

Optionally, the computing power instance ID (which may be a task ID or another form, may be CMF/TA assignment, or may be TS/CS assignment) is in a one-to-one correspondence with a configuration related to a computing amount, for example, computing power, a model, a split learning location, an inference segmentation point location, local epochs of federated learning, and the like.

Therefore, after receiving the first message in step S802, the terminal sends the acknowledgment message. In this way, the terminal adjusts computing power based on a decision of the network device, to adjust the corresponding computing power based on a computing power requirement of the terminal. In other words, the wireless network system in which the terminal device and the network device are located may become dual infrastructure for communication, connection, and computing. In the manner in which the network device configures the computing power of the terminal device based on the first configuration information, the terminal device serves as the computing node to participate in the computing process corresponding to the computing power instance. This can effectively improve a computing resource reuse degree, to increase network revenue.

In some implementations, the first computing power instance may be a computing power instance on which the network device and one or more terminal devices perform collaborative computing, so that the terminal device can share a computing resource on the network device side when executing the computing power instance based on the first configuration information included in the first message, to resolve a problem of insufficient computing resources of the terminal device.

In some implementations, the first computing power instance may be a computing power instance on which the terminal device and another computing node perform collaborative computing, so that the terminal device can share a computing resource on the terminal device side when executing the computing power instance based on the first configuration information included in the first message. In this way, the computing resource of the terminal device is shared, and a computing resource reuse degree is improved.

Optionally, the another computing node may include another terminal device and/or another network device.

As shown in FIG. 9, an embodiment of this application provides a communication apparatus 900. The communication apparatus 900 can implement the functions of the terminal device (or the network device) in the foregoing method embodiments, and therefore can also implement beneficial effects of the foregoing method embodiments. In this embodiment of this application, the communication apparatus 900 may be a terminal device (or a network device), or may be an integrated circuit or component, for example, a chip, inside a terminal device (or a network device). In the following embodiments, an example in which the communication apparatus 900 is a terminal device or a network device is used for description.

In a possible implementation, when the apparatus 900 is configured to perform the method performed by the terminal device in any one of the foregoing embodiments, the apparatus 900 includes a processing unit 901 and a transceiver unit 902;
the transceiver unit 902 is configured to receive a first message from a network device, where the first message includes first configuration information, and the first configuration information includes configuration information of at least one computing power instance;
the processing unit 901 is configured to obtain first information, where the first information indicates a first computing power instance, and the first computing power instance is a computing power instance in the at least one computing power instance; and
the processing unit 901 is further configured to execute the first computing power instance based on the first information.

In a possible implementation, the first message further includes second configuration information, the second configuration information includes configuration information of at least one computing power resource, and the at least one computing power resource is associated with the at least one computing power instance.

In a possible implementation, the first information includes an identifier of the first computing power instance and/or an identifier of computing power resource information corresponding to the first computing power instance; and
that the processing unit 901 is configured to obtain first information includes:
the processing unit 901 is configured to control the transceiver unit 902 to receive the first information, where the first information is carried in L1 control information, L2 control information, or an L3 message.

In a possible implementation,
the transceiver unit 902 is further configured to receive a reference signal RS; and
the transceiver unit 902 is further configured to send a measurement result corresponding to the RS.

In a possible implementation,
the first computing power instance is a default computing power instance; and/or
the computing power resource information corresponding to the first computing power instance is default computing power resource information.

In a possible implementation, that the processing unit 901 is configured to obtain first information includes:
the processing unit 901 generates the first information when at least one of the following is met:
a first timer expires, where configuration information of the first timer is included in the first message;
a battery level of the terminal device is less than a first threshold; or
the terminal device enters a radio resource control idle RRC idle state.

In a possible implementation,
the transceiver unit 902 is further configured to send first indication information to the network device, where the first indication information indicates a computing power status of the terminal device.

In a possible implementation,
the transceiver unit 902 is further configured to send second indication information to the network device, where the second indication information indicates computing power resource information and/or a computing power instance expected by the terminal device.

In a possible implementation,
when the processing unit 901 executes the first computing power instance based on the first information, the transceiver unit 902 is further configured to send third indication information, where the third indication information indicates computing power adjustment information of the terminal device; and
the transceiver unit 902 is further configured to receive third configuration information from the network device, where the third configuration information is used to update the first configuration information, and/or the third configuration information is used to update the second configuration information.

In a possible implementation, the computing power instance in the at least one computing power instance includes at least one of the following:
execution duration information, computing power information, model information, a split learning location, an inference segmentation point location, or local epochs of federated learning.

In a possible implementation, the information of the at least one computing power resource includes at least one of the following:
CPU type information, storage information, execution duration information, memory information, or battery level information.

In a possible implementation, that the at least one computing power resource is associated with the at least one computing power instance includes:
each of the at least one computing power resource is in a one-to-one correspondence with each of the at least one computing power instance; or
one of the at least one computing power resource corresponds to one or more computing power instances in the at least one computing power instance.

In a possible implementation, the first indication information includes at least one of the following:
CPU type information, storage information, memory information, battery level information, and computing power utilization information.

In a possible implementation, the third indication information includes:
memory information, battery level information, and computing power utilization information.

In a possible implementation, when the apparatus 900 is configured to perform the method performed by the network device in any one of the foregoing embodiments, the apparatus 900 includes a processing unit 901 and a transceiver unit 902;
the processing unit 901 is configured to generate a first message, where the first message includes first configuration information, and the first configuration information includes configuration information of at least one computing power instance; and
the transceiver unit 902 is configured to send the first message.

In a possible implementation, the first message further includes second configuration information, the second configuration information includes configuration information of at least one computing power resource, and the at least one computing power resource is associated with the at least one computing power instance.

In a possible implementation,
the transceiver unit 902 is further configured to send first information, where the first information indicates a first computing power instance, the first computing power instance is a computing power instance in the at least one computing power instance, and the first information includes an identifier of the first computing power instance and/or an identifier of computing power resource information corresponding to the first computing power instance; and
the first information is carried in L1 control information, L2 control information, or an L3 message.

In a possible implementation,
the transceiver unit 902 is further configured to send a reference signal RS;
the transceiver unit 902 is further configured to receive a measurement result corresponding to the RS; and
the processing unit 901 is further configured to generate the first information based on the measurement result corresponding to the RS.

In a possible implementation,
the transceiver unit 902 is further configured to receive first indication information from the terminal device, where the first indication information indicates a computing power status of the terminal device; and
the processing unit 901 is further configured to determine the first information based on the first indication information.

In a possible implementation,
the transceiver unit 902 is further configured to receive second indication information from the terminal device, where the second indication information indicates computing power resource information and/or a computing power instance expected by the terminal device; and
the processing unit 901 is further configured to determine the first information based on the second indication information.

In a possible implementation,
the transceiver unit 902 is further configured to receive third indication information from the terminal device, where the third indication information indicates computing power adjustment information of the terminal device; and
the processing unit 901 is further configured to send third configuration information based on the third indication information, where the third configuration information is used to update the first configuration information, and/or the third configuration information is used to update the second configuration information.

In a possible implementation, the computing power instance in the at least one computing power instance includes at least one of the following:
execution duration information, computing power information, model information, a split learning location, an inference segmentation point location, or local epochs of federated learning.

In a possible implementation, the information of the at least one computing power resource includes at least one of the following:
CPU type information, storage information, execution duration information, memory information, or battery level information.

In a possible implementation, that the at least one computing power resource is associated with the at least one computing power instance includes:
each of the at least one computing power resource is in a one-to-one correspondence with each of the at least one computing power instance; or
one of the at least one computing power resource corresponds to one or more computing power instances in the at least one computing power instance.

In a possible implementation, the first indication information includes at least one of the following:
CPU type information, storage information, memory information, battery level information, and computing power utilization information.

In a possible implementation, the third indication information includes:
memory information, battery level information, and computing power utilization information.

In a possible implementation, when the apparatus 900 is configured to perform the method performed by the terminal device in any one of the foregoing embodiments, the apparatus 900 includes a processing unit 901 and a transceiver unit 902;
the processing unit 901 is configured to determine computing power indication information;
the transceiver unit 902 is configured to send the computing power indication information to a network device; and
the transceiver unit 902 is further configured to receive a first message from the network device, where the first message includes first configuration information, and the first configuration information is used to configure at least one computing power instance.

In a possible implementation,
the transceiver unit 902 is further configured to receive a second message from the network device, where the second message includes initial configuration information, and the initial configuration information is used to configure at least one computing power instance.

In a possible implementation,
the transceiver unit 902 is further configured to send a response message or an acknowledgment message of the first message.

In a possible implementation, the computing power indication information includes first indication information, and the first indication information indicates a computing power status of the terminal device.

In a possible implementation, the first indication information includes at least one of the following:
CPU type information, storage information, memory information, battery level information, and computing power utilization information.

In a possible implementation, the computing power indication information includes second indication information, and the second indication information indicates computing power resource information and/or a computing power instance expected by the terminal device.

In a possible implementation, the computing power indication information includes third indication information, and the third indication information indicates computing power adjustment information of the terminal device.

In a possible implementation, the third indication information includes:
memory information, battery level information, and computing power utilization information.

In a possible implementation, the first message further includes second configuration information, where the second configuration information is used to configure information of at least one computing power resource, and the information of the at least one computing power resource is associated with the at least one computing power instance.

In a possible implementation, that the at least one computing power resource is associated with the at least one computing power instance includes:
each of the at least one computing power resource is in a one-to-one correspondence with each of the at least one computing power instance; or
one of the at least one computing power resource corresponds to one or more computing power instances in the at least one computing power instance.

In a possible implementation, the information of the at least one computing power resource includes at least one of the following:
CPU type information, storage information, execution duration information, memory information, or battery level information.

In a possible implementation, the computing power instance in the at least one computing power instance includes at least one of the following:
execution duration information, computing power information, model information, a split learning location, an inference segmentation point location, or local epochs of federated learning.

In a possible implementation, when the apparatus 900 is configured to perform the method performed by the terminal device in any one of the foregoing embodiments, the apparatus 900 includes a processing unit 901 and a transceiver unit 902;
the transceiver unit 902 is configured to receive computing power indication information from the terminal device;
the processing unit 901 is configured to determine a first message from the terminal device based on the computing power indication information, where the first message includes first configuration information, and the first configuration information is used to configure at least one computing power instance; and
the transceiver unit 902 is further configured to send the first message.

In a possible implementation,
the transceiver unit 902 is further configured to send a second message to the terminal device, where the second message includes initial configuration information, and the initial configuration information is used to configure at least one computing power instance.

In a possible implementation,
the transceiver unit 902 is further configured to receive a response message or an acknowledgment message of the first message from the terminal device.

In a possible implementation, the computing power indication information includes first indication information, and the first indication information indicates a computing power status of the terminal device.

In a possible implementation, the first indication information includes at least one of the following:
CPU type information, storage information, memory information, battery level information, and computing power utilization information.

In a possible implementation, the computing power indication information includes second indication information, and the second indication information indicates computing power resource information and/or a computing power instance expected by the terminal device.

In a possible implementation, the computing power indication information includes third indication information, and the third indication information indicates computing power adjustment information of the terminal device.

In a possible implementation, the third indication information includes:
memory information, battery level information, and computing power utilization information.

In a possible implementation, the first message further includes second configuration information, where the second configuration information is used to configure information of at least one computing power resource, and the information of the at least one computing power resource is associated with the at least one computing power instance.

In a possible implementation, that the at least one computing power resource is associated with the at least one computing power instance includes:
each of the at least one computing power resource is in a one-to-one correspondence with each of the at least one computing power instance; or
one of the at least one computing power resource corresponds to one or more computing power instances in the at least one computing power instance.

In a possible implementation, the information of the at least one computing power resource includes at least one of the following:
CPU type information, storage information, execution duration information, memory information, or battery level information.

In a possible implementation, the computing power instance in the at least one computing power instance includes at least one of the following:
execution duration information, computing power information, model information, a split learning location, an inference segmentation point location, or local epochs of federated learning.

It should be noted that for specific content such as an information execution process of the units of the communication apparatus 900, refer to descriptions in the foregoing method embodiments of this application. Details are not described herein again.

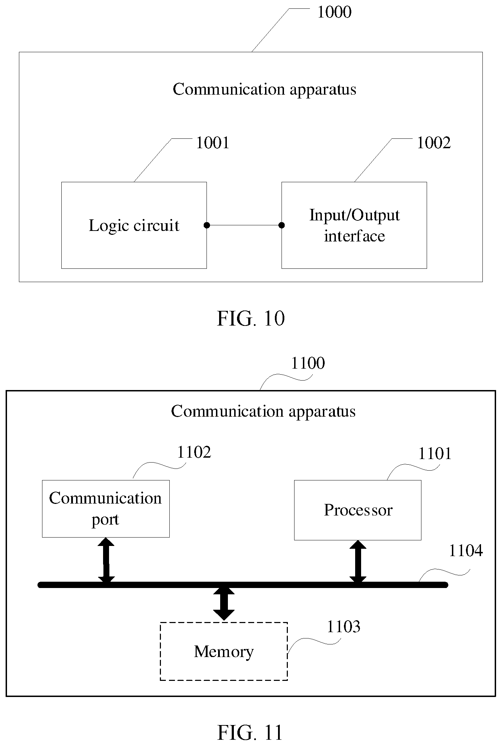

FIG. 10 is another schematic diagram of a structure of a communication apparatus 1000 according to this application. The communication apparatus 1000 includes at least an input/output interface 1002. The communication apparatus 1000 may be a chip or an integrated circuit.

Optionally, the communication apparatus further includes a logic circuit 1001.

The transceiver unit 902 shown in FIG. 9 may be a communication interface. The communication interface may be the input/output interface 1002 in FIG. 10. The input/output interface 1002 may include an input interface and an output interface. Alternatively, the communication interface may be a transceiver circuit, and the transceiver circuit may include an input interface circuit and an output interface circuit.

Optionally, the input/output interface 1002 is configured to input a first message and first information. The logic circuit 1001 is configured to execute a first computing power instance based on the first information. The logic circuit 1001 and the input/output interface 1002 may further perform other steps performed by the terminal device in any one of the foregoing embodiments to achieve corresponding beneficial effects. Details are not described herein again.

Optionally, the logic circuit 1001 is configured to generate the first message. The input/output interface 1002 is configured to send the first message. The logic circuit 1001 and the input/output interface 1002 may further perform other steps performed by the network device in any one of the embodiments to achieve corresponding beneficial effects. Details are not described herein again.

In a possible implementation, the processing unit 901 shown in FIG. 9 may be the logic circuit 1001 in FIG. 10.

Optionally, the logic circuit 1001 may be a processing apparatus, and some or all functions of the processing apparatus may be implemented by using software. Some or all functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application-specific integrated circuit, ASIC), system on chips (system on chip, SoC), central processing units (central processor unit, CPU), network processors (network processor, NP), digital signal processors (digital signal processor, DSP), micro controller units (micro controller unit, MCU), programmable logic devices (programmable logic device, PLD), or another integrated chip, or any combination of the foregoing chips or processors.

FIG. 11 shows a communication apparatus 1100 in the foregoing embodiments according to an embodiment of this application. The communication apparatus 1100 may be specifically the communication apparatus used as the terminal device in the foregoing embodiment. In an example shown in FIG. 11, the terminal device is implemented by using a terminal device (or a component in a terminal device).

In a schematic diagram of a possible logical structure of the communication apparatus 1100, the communication apparatus 1100 may include but is not limited to at least one processor 1101 and a communication port 1102.

Further, optionally, the apparatus may further include at least one of the following: a memory 1103 and a bus 1104. In this embodiment of this application, the at least one processor 1101 is configured to perform control processing on an action of the communication apparatus 1100.

In addition, the processor 1101 may be a central processing unit, a general-purpose processor, a digital signal processor, an application-specific integrated circuit, a field programmable gate array or another programmable logic device, a transistor logic device, a hardware component, or any combination thereof. The processor 1101 may implement or execute logical blocks, modules, and circuits in various examples described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing systems, apparatuses, and units, refer to a corresponding process in the foregoing method embodiments. Details are not described herein again.

It should be noted that the communication apparatus 1100 shown in FIG. 11 may be specifically configured to implement the steps implemented by the terminal device in the foregoing method embodiments, and implement technical effects corresponding to the terminal device. For a specific implementation of the communication apparatus shown in FIG. 11, refer to the description in the foregoing method embodiments. Details are not described herein again.

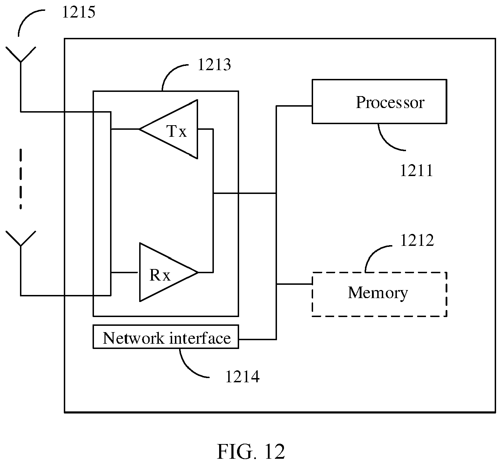

FIG. 12 is a schematic diagram of a structure of a communication apparatus in the foregoing embodiments according to an embodiment of this application. The communication apparatus may be specifically the communication apparatus used as the network device in the foregoing embodiments. In an example shown in FIG. 12, the network device is implemented by using a network device (or a component in a network device). For a structure of the communication apparatus, refer to the structure shown in FIG. 12.

The communication apparatus includes at least one processor 1211 and at least one network interface 1214. Further, optionally, the communication apparatus further includes at least one memory 1212, at least one transceiver 1213, and one or more antennas 1215. The processor 1211, the memory 1212, the transceiver 1213, and the network interface 1214 are connected, for example, through a bus. In this embodiment of this application, the connection may include various interfaces, transmission lines, buses, or the like. This is not limited in this embodiment. The antenna 1215 is connected to the transceiver 1213. The network interface 1214 is configured to enable the communication apparatus to communicate with another communication device through a communication link. For example, the network interface 1214 may include a network interface between the communication apparatus and a core network device, for example, an S 1 interface. The network interface may include a network interface between the communication apparatus and another communication apparatus (for example, another network device or core network device), for example, an X2 or Xn interface.

The processor 1211 is mainly configured to: process a communication protocol and communication data; and control the entire communication apparatus, execute a software program, and process data of the software program. For example, the processor 1211 is configured to support the communication apparatus in performing actions described in embodiments. The communication apparatus may include a baseband processor and a central processing unit. The baseband processor is mainly configured to process a communication protocol and communication data. The central processing unit is mainly configured to control the entire terminal device, execute a software program, and process data of the software program. Functions of the baseband processor and the central processing unit may be integrated into the processor 1211 in FIG. 12. A person skilled in the art may understand that the baseband processor and the central processing unit each may be an independent processor, and are interconnected by using a technology such as a bus. A person skilled in the art may understand that the terminal device may include a plurality of baseband processors, to adapt to different network standards, the terminal device may include a plurality of central processing units, to enhance a processing capability of the terminal device, and various components of the terminal device may be connected through various buses. The baseband processor may also be expressed as a baseband processing circuit or a baseband processing chip. The central processing unit may also be expressed as a central processing circuit or a central processing chip. The function of processing the communication protocol and the communication data may be built in the processor, or may be stored in the memory in a form of a software program, and the processor executes the software program to implement a baseband processing function.

The memory is mainly configured to store a software program and data. The memory 1212 may exist independently, and is connected to the processor 1211. Optionally, the memory 1212 may be integrated with the processor 1211. For example, the memory 1212 and the processor 1211 are integrated into one chip. The memory 1212 can store program code for executing the technical solution in embodiments of this application, and the processor 1211 controls execution of the program code. Various types of executed computer program code may also be considered as drivers of the processor 1211.

FIG. 12 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 1213 may be configured to support receiving or sending of a radio frequency signal between the communication apparatus and a terminal, and the transceiver 1213 may be connected to the antenna 1215. The transceiver 1213 includes a transmitter Tx and a receiver Rx. Specifically, the one or more antennas 1215 may receive a radio frequency signal. The receiver Rx of the transceiver 1213 is configured to receive the radio frequency signal from the antenna, convert the radio frequency signal into a digital baseband signal or a digital intermediate frequency signal, and provide the digital baseband signal or the digital intermediate frequency signal for the processor 1211, so that the processor 1211 further processes the digital baseband signal or the digital intermediate frequency signal, for example, performs demodulation processing and decoding processing. In addition, the transmitter Tx of the transceiver 1213 is further configured to receive a modulated digital baseband signal or digital intermediate frequency signal from the processor 1211, convert the modulated digital baseband signal or digital intermediate frequency signal into a radio frequency signal, and send the radio frequency signal through the one or more antennas 1215. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 1213 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

It should be noted that the communication apparatus shown in FIG. 12 may be specifically configured to implement steps implemented by the network device in the foregoing method embodiments, and implement technical effects corresponding to the network device. For a specific implementation of the communication apparatus shown in FIG. 12, refer to descriptions in the foregoing method embodiments. Details are not described herein again.

An embodiment of this application further provides a computer-readable storage medium that stores one or more computer-executable instructions. When the computer-executable instructions are executed by a processor, the processor performs the method described in the possible implementations of the terminal device in the foregoing embodiments.

An embodiment of this application further provides a computer-readable storage medium that stores one or more computer-executable instructions. When the computer-executable instructions are executed by a processor, the processor performs the method described in the possible implementations of the network device in the foregoing embodiments.

An embodiment of this application further provides a computer program product (or referred to as a computer program) that stores one or more computers. When the computer program product is executed by the processor, the processor performs the method in the foregoing possible implementations of the terminal device.

An embodiment of this application further provides a computer program product that stores one or more computers. When the computer program product is executed by the processor, the processor performs the method in the foregoing possible implementations of the network device.

An embodiment of this application further provides a chip system. The chip system includes at least one processor, configured to support a communication apparatus in implementing the functions in the possible implementations of the foregoing communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device in the foregoing method embodiments.

An embodiment of this application further provides a chip system. The chip system includes at least one processor, configured to support a communication apparatus in implementing the functions in the possible implementations of the foregoing communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the network device in the foregoing method embodiments.

An embodiment of this application further provides a communication system. The network system architecture includes the terminal device and the network device in any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit. When the integrated unit is implemented in the form of a software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A communication method, comprising:
receiving, by a first communication apparatus, a first message from a network device, wherein the first message comprises first configuration information, and the first configuration information comprises configuration information of at least one computing power instance;
obtaining, by the first communication apparatus, first information, wherein the first information indicates a first computing power instance, and the first computing power instance is a computing power instance in the at least one computing power instance; and
executing, by the first communication apparatus, the first computing power instance based on the first information.

2. The method according to claim 1, wherein the first message further comprises second configuration information, the second configuration information comprises configuration information of at least one computing power resource, and the at least one computing power resource is associated with the at least one computing power instance.

3. The method according to claim 2, wherein the first information comprises an identifier of the first computing power instance and/or an identifier of computing power resource information corresponding to the first computing power instance; and
the obtaining, by the first communication apparatus, first information comprises:
receiving, by the first communication apparatus, the first information, wherein the first information is carried in layer 1 control information, layer 2 control information, or a layer 3 message.

4. The method according to claim 3, wherein before the receiving, by the first communication apparatus, the first information, the method further comprises:
receiving, by the first communication apparatus, a reference signal RS; and
sending, by the first communication apparatus, a measurement result corresponding to the RS.

5. The method according to claim 1 or 2, wherein
the first computing power instance is a default computing power instance; and/or
the computing power resource information corresponding to the first computing power instance is default computing power resource information.

6. The method according to claim 5, wherein the obtaining, by the first communication apparatus, first information comprises:
generating, by the first communication apparatus, the first information when at least one of the following is met:
a first timer expires, wherein configuration information of the first timer is comprised in the first message;
a battery level of the first communication apparatus is less than a first threshold; or
the first communication apparatus enters a radio resource control idle RRC idle state.

7. The method according to any one of claims 1 to 6, wherein before the receiving, by a first communication apparatus, a first message from a network device, the method further comprises:
sending, by the first communication apparatus, first indication information to the network device, wherein the first indication information indicates a computing power status of the first communication apparatus.

8. The method according to any one of claims 1 to 7, wherein before the receiving, by a first communication apparatus, a first message from a network device, the method further comprises:
sending, by the first communication apparatus, second indication information to the network device, wherein the second indication information indicates computing power resource information and/or a computing power instance expected by the first communication apparatus.

9. The method according to any one of claims 1 to 8, wherein the method further comprises:
when the first communication apparatus executes the first computing power instance based on the first information, sending, by the first communication apparatus, third indication information, wherein the third indication information indicates computing power adjustment information of the first communication apparatus; and
receiving, by the first communication apparatus, third configuration information from the network device, wherein the third configuration information is used to update the first configuration information, and/or the third configuration information is used to update the second configuration information.

10. A communication method, comprising:
generating, by a second communication apparatus, a first message, wherein the first message comprises first configuration information, and the first configuration information comprises configuration information of at least one computing power instance; and
sending, by the second communication apparatus, the first message.

11. The method according to claim 10, wherein the first message further comprises second configuration information, the second configuration information comprises configuration information of at least one computing power resource, and the at least one computing power resource is associated with the at least one computing power instance.

12. The method according to claim 11, wherein the method further comprises:
sending, by the second communication apparatus, first information, wherein the first information indicates a first computing power instance, the first computing power instance is a computing power instance in the at least one computing power instance, and the first information comprises an identifier of the first computing power instance and/or an identifier of computing power resource information corresponding to the first computing power instance; and
the first information is carried in layer 1 control information, layer 2 control information, or a layer 3 message.

13. The method according to claim 12, wherein before the sending, by the second communication apparatus, first information, the method further comprises:
sending, by the second communication apparatus, a reference signal RS;
receiving, by the second communication apparatus, a measurement result corresponding to the RS; and
generating, by the second communication apparatus, the first information based on the measurement result corresponding to the RS.

14. The method according to claim 12 or 13, wherein before the sending, by the second communication apparatus, first information, the method further comprises:
receiving, by the second communication apparatus, first indication information from a terminal device, wherein the first indication information indicates a computing power status of the terminal device; and
determining, by the second communication apparatus, the first information based on the first indication information.

15. The method according to claim 12 or 13, wherein before the sending, by the second communication apparatus, first information, the method further comprises:
receiving, by the second communication apparatus, second indication information from a terminal device, wherein the second indication information indicates computing power resource information and/or a computing power instance expected by the terminal device; and
determining, by the second communication apparatus, the first information based on the second indication information.

16. The method according to claim 12 or 13, wherein after the sending, by the second communication apparatus, first information, the method further comprises:
receiving, by the second communication apparatus, third indication information from a terminal device, wherein the third indication information indicates computing power adjustment information of the terminal device; and
sending, by the second communication apparatus, third configuration information based on the third indication information, wherein the third configuration information is used to update the first configuration information, and/or the third configuration information is used to update the second configuration information.

17. The method according to any one of claims 1 to 16, wherein the computing power instance in the at least one computing power instance comprises at least one of the following:
execution duration information, computing power information, model information, a split learning location, an inference segmentation point location, or local epochs of federated learning.

18. The method according to any one of claims 2 to 9 and 10 to 17, wherein the information of the at least one computing power resource comprises at least one of the following:
central processing unit CPU type information, storage information, execution duration information, memory information, or battery level information.

19. A communication apparatus, comprising a transceiver unit and a processing unit, wherein
the transceiver unit is configured to receive a first message from a network device, wherein the first message comprises first configuration information, and the first configuration information comprises configuration information of at least one computing power instance;
the processing unit is configured to obtain first information, wherein the first information indicates a first computing power instance, and the first computing power instance is a computing power instance in the at least one computing power instance; and
the processing unit is configured to execute the first computing power instance based on the first information.

20. The apparatus according to claim 19, wherein the first message further comprises second configuration information, the second configuration information comprises configuration information of at least one computing power resource, and the at least one computing power resource is associated with the at least one computing power instance.

21. The apparatus according to claim 20, wherein the first information comprises an identifier of the first computing power instance and/or an identifier of computing power resource information corresponding to the first computing power instance; and
that the processing unit is configured to obtain the first information comprises:
the processing unit is configured to receive the first information via the transceiver unit, wherein the first information is carried in layer 1 control information, layer 2 control information, or a layer 3 message.

22. The apparatus according to claim 21, wherein
the transceiver unit is further configured to receive a reference signal RS; and
the transceiver unit is further configured to send a measurement result corresponding to the RS.

23. The apparatus according to claim 19 or 20, wherein
the first computing power instance is a default computing power instance; and/or
the computing power resource information corresponding to the first computing power instance is default computing power resource information.

24. The apparatus according to claim 23, wherein that the processing unit is configured to obtain the first information comprises:
the processing unit generates the first information when at least one of the following is met:
a first timer expires, wherein configuration information of the first timer is comprised in the first message;
a battery level of a terminal device is less than a first threshold; or
a terminal device enters a radio resource control idle RRC idle state.

25. The apparatus according to any one of claims 19 to 24, wherein
the transceiver unit is further configured to send first indication information to the network device, wherein the first indication information indicates a computing power status of the terminal device.

26. The apparatus according to any one of claims 19 to 25, wherein
the transceiver unit is further configured to send second indication information to the network device, wherein the second indication information indicates computing power resource information and/or a computing power instance expected by the terminal device.

27. The apparatus according to any one of claims 19 to 26, wherein
when the processing unit executes the first computing power instance based on the first information, the transceiver unit is further configured to send third indication information, wherein the third indication information indicates computing power adjustment information of the terminal device; and
the transceiver unit is further configured to receive third configuration information from the network device, wherein the third configuration information is used to update the first configuration information, and/or the third configuration information is used to update the second configuration information.

28. A communication apparatus, comprising a processing unit and a transceiver unit, wherein
the processing unit is configured to generate a first message, wherein the first message comprises first configuration information, and the first configuration information comprises configuration information of at least one computing power instance; and
the transceiver unit is configured to send the first message.

29. The apparatus according to claim 28, wherein the first message further comprises second configuration information, the second configuration information comprises configuration information of at least one computing power resource, and the at least one computing power resource is associated with the at least one computing power instance.

30. The apparatus according to claim 29, wherein
the transceiver unit is further configured to send first information, wherein the first information indicates a first computing power instance, the first computing power instance is a computing power instance in the at least one computing power instance, and the first information comprises an identifier of the first computing power instance and/or an identifier of computing power resource information corresponding to the first computing power instance; and
the first information is carried in layer 1 control information, layer 2 control information, or a layer 3 message.

31. The apparatus according to claim 30, wherein
the transceiver unit is further configured to send a reference signal RS;
the transceiver unit is further configured to receive a measurement result corresponding to the RS; and
the processing unit is further configured to generate the first information based on the measurement result corresponding to the RS.

32. The apparatus according to claim 28 or 29, wherein
the transceiver unit is further configured to receive first indication information from a terminal device, wherein the first indication information indicates a computing power status of the terminal device; and
the processing unit is further configured to determine the first information based on the first indication information.

33. The apparatus according to claim 28 or 29, wherein
the transceiver unit is further configured to receive second indication information from a terminal device, wherein the second indication information indicates computing power resource information and/or a computing power instance expected by the terminal device; and
the processing unit is further configured to determine the first information based on the second indication information.

34. The apparatus according to claim 28 or 29, wherein
the transceiver unit is further configured to receive third indication information from a terminal device, wherein the third indication information indicates computing power adjustment information of the terminal device; and
the processing unit is further configured to determine the first information based on the third indication information.

35. The apparatus according to any one of claims 19 to 34, wherein the computing power instance in the at least one computing power instance comprises at least one of the following:
execution duration information, computing power information, model information, a split learning location, an inference segmentation point location, or local epochs of federated learning.

36. The apparatus according to any one of claims 20 to 27 and 29 to 35, wherein the information of the at least one computing power resource comprises at least one of the following:
CPU type information, storage information, execution duration information, memory information, or battery level information.

37. A communication apparatus, comprising at least one logic circuit and an input/output interface, wherein
the input/output interface is configured to input a first message; and
the logic circuit is configured to perform the method according to any one of claims 1 to 9.

38. A communication apparatus, comprising at least one logic circuit and an input/output interface, wherein
the input/output interface is configured to output a first message; and
the logic circuit is configured to perform the method according to any one of claims 10 to 18.

39. A computer-readable storage medium, wherein the medium stores instructions, and when the instructions are executed by a computer, the method according to any one of claims 1 to 18 is implemented.

40. A computer program product, comprising instructions, wherein when the instructions are run on a computer, the computer is enabled to perform the method according to any one of claims 1 to 18.

41. A communication system, comprising a terminal device and a network device, wherein the terminal device is configured to perform the method according to any one of claims 1 to 9, and the network device is configured to perform the method according to any one of claims 10 to 18.
